# EUROPEAN PATENT SPECIFICATION

(11) **EP 4 106 480 B1**
(45) Date of publication and mention of the grant of the patent: **30.07.2025**
(21) Application number: 20923470.7
(22) Date of filing: 30.10.2020
(51) Int. Cl.: H04W 76/12, H04W 76/22, H04L 69/14, H04L 69/16, H04L 67/141, H04W 80/06, H04W 76/11, H04W 88/14

(54) **QUIC AND MP-QUIC COMMUNICATIONS**
QUIC UND MP-QUIC KOMMUNIKATIONEN
COMMUNICATIONS QUIC ET MP-QUIC

(30) Priority: 06.03.2020 CN 202010152386
(43) Date of publication of application: 21.12.2022
(60) Divisional application: 25181734.2
(73) Proprietor: Huawei Technologies Co., Ltd., Shenzhen, Guangdong 518129, (CN)
(72) Inventor: YU, Youyang, Shenzhen, Guangdong 518129 (CN)
(74) Representative: Goddar, Heinz J.
(86) International application number: PCT/CN2020/125438
(87) International publication number: WO 2021/174884

(56) References cited:
- CN-A- 110 149 388
- CN-A- 110 830 429
- US-A1- 2019 320 479

## Description

### TECHNICAL FIELD

This application relates to QUIC and MP-QUIC communications.

### BACKGROUND

In a next generation wireless communication system, for example, in a new radio (new radio, NR) system, user equipment (user equipment, UE) establishes a protocol data unit (protocol data unit, PDU) session with a data network (data network, DN) network element through a user plane function (user plane function, UPF) network element. The PDU session provides a data transmission service between a terminal device and the DN network element.

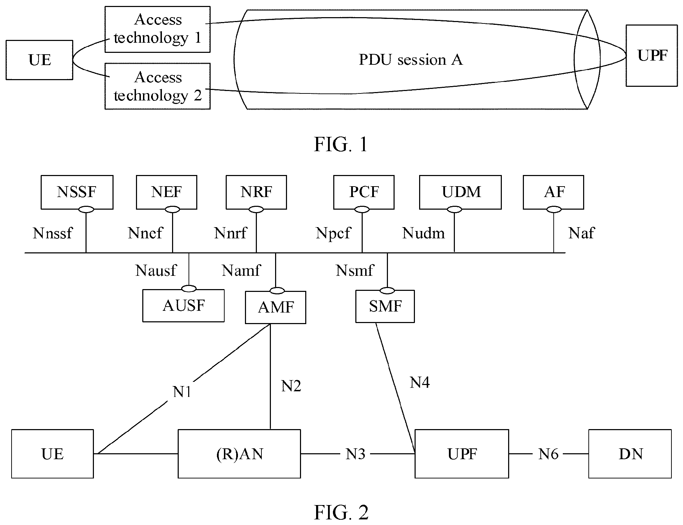

In a conventional technology, establishment of a multi-access PDU session (which may also be referred to as a multi-PDU session) between UE and a UPF network element may be supported. For example, as shown in FIG. 1, a multi-access PDU session A can be established between UE and a UPF network element based on an access technology 1 and an access technology 2. In this case, a traffic flow of the UE may be transmitted to the UPF network element by using the access technology 1 and/or the access technology 2. The multi-access PDU session is relative to a single-access PDU session. The single-access PDU session is a PDU session that accesses the UPF network element by using one access technology, and the multi-access PDU session is a PDU session that accesses the UPF network element by using a plurality of access technologies (at least two access technologies).

However, in the conventional technology, a traffic flow using a user datagram protocol (user datagram protocol, UDP) cannot implement offloading of the traffic flow by using a multi-access technology.

CN 110830429 A describes a service flow transmission method, wherein a terminal receives a shunting mode of the service flow and/or a transmission method of the service flow sent by a core network element, and a packet data unit (PDU) session where the service flow is located supports a plurality of access technologies; and the terminal transmits the service flow by adopting at least one of the plurality of access technologies according to the shunting mode and/or the service flow transmission method.

### SUMMARY

The invention is defined in the independent claims. Additional features of the invention are provided in the dependent claims. A network side may control establishment of a quick UDP internet connection (QUIC) connection or a multi-path quick UDP internet connection (MP-QUIC) connection between a terminal device and a UPF network element, to implement data transmission for a UDP traffic flow based on the QUIC connection or the MP-QUIC connection.

According to a first aspect, an embodiment of this application provides a communication method. The method includes: A session management function SMF network element receives a first message from a terminal device, where the first message is used to request to establish or update a protocol data unit PDU session, the first message includes first indication information, and the first indication information is indication information used to indicate that the terminal device supports a QUIC capability, or indication information used to indicate that the terminal device supports a MP-QUIC capability. The SMF network element determines whether a traffic flow in the PDU session is transmitted by using a QUIC method or an MP-QUIC method. The SMF network element sends a second message to the terminal device, where the second message is used to indicate that the PDU session is successfully established or updated, the second message includes second indication information, and the second indication information is used to indicate that the traffic flow in the PDU session is transmitted by using the QUIC method, or is used to indicate that the traffic flow in the PDU session is transmitted by using the MP-QUIC method.

Usually, UE and a UPF network element need to use a transmission control protocol (transmission control protocol, TCP) or a multi-path transmission control protocol (multi-path TCP, MPTCP), to implement traffic offloading at a data packet granularity. This also requires that a traffic flow on which traffic offloading is performed at a packet granularity needs to support the MPTCP or the TCP. However, in an existing service, although the TCP or the MPTCP is one of important and widely used transmission technologies, most traffic flows, for example, a video service, still use a user datagram protocol (user datagram protocol, UDP) transmission technology. As a result, a traffic flow using a UDP cannot be transmitted by using a multi-access technology. Therefore, in this embodiment of this application, a network side may control establishment of a QUIC connection or an MP-QUIC connection between the terminal device and the UPF network element, to implement data transmission at a flow granularity for a UDP traffic flow based on the QUIC connection or the MP-QUIC connection.

According to a second aspect, an embodiment of this application provides a communication method. The method includes: A session management function SMF network element receives a first message and first indication information from a terminal device, where the first message is used to request to establish or update a protocol data unit PDU session, and the first indication information is indication information used to indicate that the terminal device supports a QUIC capability, or indication information used to indicate that the terminal device supports a MP-QUIC capability. The SMF network element determines whether a traffic flow in the PDU session is transmitted by using a QUIC method or an MP-QUIC method. The SMF network element sends a second message and second indication information to the terminal device, where the second message is used to indicate that the PDU session is successfully established or updated, and the second indication information is used to indicate that the traffic flow in the PDU session is transmitted by using the QUIC method, or is used to indicate that the traffic flow in the PDU session is transmitted by using the MP-QUIC method.

A difference between the embodiment of the second aspect and the embodiment of the first aspect lies in that, in the embodiment of the second aspect, the first indication information is not included in the first message, and the second indication information is not included in the second message. For beneficial effects of the embodiment of the second aspect, refer to beneficial effects of the embodiment of the first aspect. Details are not described herein again.

For the embodiments of the first aspect and the second aspect of this application, descriptions are provided below.

The second indication information includes a QUIC function parameter or an MP-QUIC function parameter, and the method further includes: The SMF network element obtains the QUIC function parameter or the MP-QUIC function parameter.

In a possible implementation, that the SMF network element obtains the QUIC function parameter or the MP-QUIC function parameter includes: The SMF network element sends, to a user plane function UPF network element, the indication information used to indicate that the traffic flow in the PDU session is transmitted by using the QUIC method, or the indication information used to indicate that the traffic flow in the PDU session is transmitted by using the MP-QUIC method. The SMF network element receives the QUIC function parameter or the MP-QUIC function parameter from the UPF network element.

In a possible implementation, that the SMF network element obtains the QUIC function parameter or the MP-QUIC function parameter includes: The SMF network element allocates the QUIC function parameter or the MP-QUIC function parameter. The method further includes: The SMF network element sends the QUIC function parameter or the MP-QUIC function parameter to a UPF network element.

In a possible implementation, the indication information used to indicate that the terminal device supports the QUIC capability includes one or more of the following: an indication parameter of a QUIC omitted connection identifier, a first QUIC connection identifier, a QUIC capability indication parameter, a QUIC request indication parameter, or first QUIC version information, where the first QUIC connection identifier is a connection identifier allocated by the terminal device to a QUIC connection; or the indication information used to indicate that the terminal device supports the MP-QUIC capability includes one or more of the following: an indication parameter of an MP-QUIC omitted connection identifier, a first MP-QUIC connection identifier, an MP-QUIC capability indication parameter, an MP-QUIC request indication parameter, or first MP-QUIC version information, where the first MP-QUIC connection identifier is a connection identifier allocated by the terminal device to an MP-QUIC connection.

The QUIC function parameter or the MP-QUIC function parameter includes a security parameter, which includes a non-encryption indication. In a possible implementation, the QUIC function parameter further includes one or more of the following: a QUIC function IP address, a QUIC function port number, a second QUIC connection identifier, the indication parameter of the QUIC omitted connection identifier, second QUIC version information, or a transmission parameter; or the MP-QUIC function parameter further includes one or more of the following: an MP-QUIC function IP address, an MP-QUIC function port number, a second MP-QUIC connection identifier, the indication parameter of the MP-QUIC omitted connection identifier, second MP-QUIC version information, or a transmission parameter.

In a possible implementation, the MP-QUIC function parameter further includes one or more of the following: a sub-connection identifier, an access technology indication parameter, or information about a tunnel identifier, where the sub-connection identifier is a connection identifier of an MP-QUIC sub-connection corresponding to the access technology indication parameter or the information about the tunnel identifier.

In a possible implementation, that the SMF network element determines whether a traffic flow in the PDU session is transmitted by using a QUIC method or an MP-QUIC method includes: The SMF network element receives QUIC method indication information or MP-QUIC method indication information from a policy control function PCF network element, where the QUIC method indication information is used to indicate that the traffic flow in the PDU session is transmitted by using the QUIC method, or the MP-QUIC method indication information is used to indicate that the traffic flow in the PDU session is transmitted by using the MP-QUIC method.

According to a third aspect, an embodiment of this application provides a communication method. The method includes: A terminal device sends a first message to a session management function SMF network element, where the first message is used to request a protocol data unit to establish or update a protocol data unit PDU session, the first message includes first indication information, and the first indication information is indication information used to indicate that the terminal device supports a QUIC capability, or indication information used to indicate that the terminal device supports a MP-QUIC capability. The terminal device receives a second message from the SMF network element, where the second message is used to indicate that the PDU session is successfully established or updated, the second message includes second indication information, and the second indication information is used to indicate that a traffic flow in the PDU session is transmitted by using a QUIC method, or is used to indicate that a traffic flow in the PDU session is transmitted by using an MP-QUIC method.

According to a fourth aspect, an embodiment of this application provides a communication method. The method includes: A terminal device sends a first message and first indication information to a session management function SMF network element, where the first message is used to request a protocol data unit to establish or update a protocol data unit PDU session, and the first indication information is indication information used to indicate that the terminal device supports a QUIC capability, or indication information used to indicate that the terminal device supports a MP-QUIC capability. The terminal device receives a second message and second indication information from the SMF network element, where the second message is used to indicate that the PDU session is successfully established or updated, and the second indication information is used to indicate that a traffic flow in the PDU session is transmitted by using a QUIC method, or is used to indicate that a traffic flow in the PDU session is transmitted by using an MP-QUIC method.

A difference between the embodiment of the third aspect and the embodiment of the third aspect lies in that, in the embodiment of the fourth aspect, the first indication information is not included in the first message, and the second indication information is not included in the second message. Details are not described herein again.

For the embodiments of the third aspect and the fourth aspect of this application, descriptions are provided below.

For specific content of the indication information used to indicate that the terminal device supports the QUIC capability, the indication information used to indicate that the terminal device supports the MP-QUIC capability, the second indication information, the QUIC function parameter, and the MP-QUIC function parameter in the third aspect and the fourth aspect, refer to the specific content in the first aspect. Details are not described herein again.

In a possible implementation, the method further includes: The terminal device establishes a QUIC connection or an MP-QUIC connection to a user plane function UPF network element based on the second message. The terminal device performs data transmission by using the QUIC connection or the MP-QUIC connection.

In a possible implementation, the second message further includes a traffic flow identifier or an application identifier, and that the terminal device performs data transmission by using the QUIC connection or the MP-QUIC connection includes: The terminal device transmits, by using the QUIC connection or the MP-QUIC connection, a traffic flow data packet corresponding to the traffic flow identifier or the application identifier.

In a possible implementation, that the terminal device performs data transmission by using the QUIC connection or the MP-QUIC connection includes: The terminal device performs QUIC packet header encapsulation or MP-QUIC packet header encapsulation on a to-be-transmitted data packet, where a QUIC packet header includes at least one of the QUIC function parameter, or an MP-QUIC packet header includes at least one of the MP-QUIC function parameter. The terminal device sends an encapsulated QUIC packet or an encapsulated MP-QUIC packet to the UPF network element.

According to a fifth aspect, an embodiment of this application provides a communication method. The method includes: A user plane function UPF network element receives QUIC method indication information or MP-QUIC method indication information from a session management function SMF network element, where the QUIC method indication information is used to indicate that a traffic flow in a protocol data unit PDU session is transmitted by using a QUIC method, or the MP-QUIC method indication information is used to indicate that a traffic flow in a PDU session is transmitted by using an MP-QUIC method. The UPF network element establishes a QUIC connection or an MP-QUIC connection to a terminal device based on the QUIC method indication information or the MP-QUIC method indication information.

In a possible implementation, that the UPF network element establishes a QUIC connection or an MP-QUIC connection to a terminal device based on the QUIC method indication information or the MP-QUIC method indication information includes: The UPF network element allocates a QUIC function parameter or an MP-QUIC function parameter based on the QUIC method indication information or the MP-QUIC method indication information. The UPF network element establishes the QUIC connection or the MP-QUIC connection to the terminal device by using the QUIC function parameter or the MP-QUIC function parameter. The method further includes: The UPF network element sends the QUIC function parameter or the MP-QUIC function parameter to the SMF network element.

In a possible implementation, that the UPF network element establishes a QUIC connection or an MP-QUIC connection to a terminal device based on the QUIC method indication information or the MP-QUIC method indication information includes: The UPF network element receives a QUIC function parameter or an MP-QUIC function parameter from the SMF network element, where the QUIC function parameter or the MP-QUIC function parameter is allocated by the SMF network element. The UPF network element establishes the QUIC connection or the MP-QUIC connection to the terminal device by using the QUIC function parameter or the MP-QUIC function parameter.

The QUIC function parameter or the MP-QUIC function parameter includes a security parameter, which includes a non-encryption indication. In a possible implementation, the QUIC function parameter further includes one or more of the following: a QUIC function IP address, a QUIC function port number, a second QUIC connection identifier, the indication parameter of the QUIC omitted connection identifier, second QUIC version information, or a transmission parameter; or the MP-QUIC function parameter further includes one or more of the following: an MP-QUIC function IP address, an MP-QUIC function port number, a second MP-QUIC connection identifier, the indication parameter of the MP-QUIC omitted connection identifier, second MP-QUIC version information, or a transmission parameter.

In a possible implementation, the MP-QUIC function parameter further includes one or more of the following: a sub-connection identifier, an access technology indication parameter, or information about a tunnel identifier, where the sub-connection identifier is a connection identifier of an MP-QUIC sub-connection corresponding to the access technology indication parameter or the information about the tunnel identifier.

In a possible implementation, the method further includes: The UPF network element receives a data packet from the terminal device, where the data packet is a data packet obtained after the terminal device performs QUIC packet header encapsulation or MP-QUIC packet header encapsulation, and a QUIC packet header includes at least one of the QUIC function parameter, or an MP-QUIC packet header includes at least one of the MP-QUIC function parameter.

According to a sixth aspect, an embodiment of this application provides a communication apparatus. The communication apparatus may be an SMF network element, or may be a chip or a chip system in the SMF network element. The communication apparatus may include a processing unit and a communication unit. When the communication apparatus is the SMF network element, the processing unit may be a processor, and the communication unit may be a communication interface or an interface circuit. The communication apparatus may further include a storage unit, and the storage unit may be a memory. The storage unit is configured to store instructions, and the processing unit executes the instructions stored in the storage unit, so that the SMF network element implements the communication method described in any one of the first aspect or the possible implementations of the first aspect, or the SMF network element implements the communication method described in any one of the second aspect or the possible implementations of the second aspect.

For example, the communication unit is configured to receive a first message from a terminal device, where the first message is used to request to establish or update a protocol data unit PDU session, the first message includes first indication information, and the first indication information is indication information used to indicate that the terminal device supports a QUIC capability, or indication information used to indicate that the terminal device supports a MP-QUIC capability. The processing unit is configured to determine whether a traffic flow in the PDU session is transmitted by using a QUIC method or an MP-QUIC method. The communication unit is further configured to send a second message to the terminal device, where the second message is used to indicate that the PDU session is successfully established or updated, the second message includes second indication information, and the second indication information is used to indicate that the traffic flow in the PDU session is transmitted by using the QUIC method, or is used to indicate that the traffic flow in the PDU session is transmitted by using the MP-QUIC method.

Alternatively, for example, the communication unit is configured to receive a first message and first indication information from a terminal device, where the first message is used to request to establish or update a protocol data unit PDU session, and the first indication information is indication information used to indicate that the terminal device supports a QUIC capability, or indication information used to indicate that the terminal device supports a MP-QUIC capability. The processing unit is configured to determine whether a traffic flow in the PDU session is transmitted by using a QUIC method or an MP-QUIC method. The communication unit is further configured to send a second message and second indication information to the terminal device, where the second message is used to indicate that the PDU session is successfully established or updated, and the second indication information is used to indicate that the traffic flow in the PDU session is transmitted by using the QUIC method, or is used to indicate that the traffic flow in the PDU session is transmitted by using the MP-QUIC method.

The second indication information includes a QUIC function parameter or an MP-QUIC function parameter, and the communication unit is further configured to obtain the QUIC function parameter or the MP-QUIC function parameter.

In a possible implementation, the communication unit is specifically configured to: send, to a user plane function UPF network element, the indication information used to indicate that the traffic flow in the PDU session is transmitted by using the QUIC method, or the indication information used to indicate that the traffic flow in the PDU session is transmitted by using the MP-QUIC method; and receive the QUIC function parameter or the MP-QUIC function parameter from the UPF network element.

In a possible implementation, the processing unit is further configured to allocate a QUIC function parameter or an MP-QUIC function parameter, and the communication unit is further configured to send the QUIC function parameter or the MP-QUIC function parameter to a UPF network element.

For specific content of the indication information used to indicate that the terminal device supports the QUIC capability, the indication information used to indicate that the terminal device supports the MP-QUIC capability, the second indication information, the QUIC function parameter, and the MP-QUIC function parameter in the sixth aspect, refer to the specific content in the first aspect. Details are not described herein again.

In a possible implementation, the communication unit is further configured to receive QUIC method indication information or MP-QUIC method indication information from a policy control function PCF network element, where the QUIC method indication information is used to indicate that the traffic flow in the PDU session is transmitted by using the QUIC method, or the MP-QUIC method indication information is used to indicate that the traffic flow in the PDU session is transmitted by using the MP-QUIC method.

When the communication apparatus is the chip or the chip system in the SMF network element, the processing unit may be a processor, and the communication unit may be a communication interface. For example, the communication interface may be an input/output interface, a pin, or a circuit. The processing unit executes instructions stored in a storage unit, so that the SMF network element implements the communication method described in any one of the first aspect or the possible implementations of the first aspect, or the SMF network element implements the communication method described in any one of the second aspect or the possible implementations of the second aspect. The storage unit may be a storage unit (for example, a register or a cache) in the chip, or may be a storage unit (for example, a read-only memory or a random access memory) that is in the SMF network element and that is outside the chip.

According to a seventh aspect, an embodiment of this application provides a communication apparatus. The communication apparatus may be a terminal device, or may be a chip or a chip system in the terminal device. The communication apparatus may include a processing unit and a communication unit. When the communication apparatus is the terminal device, the processing unit may be a processor, and the communication unit may be a communication interface, an interface circuit, or a transceiver. The communication apparatus may further include a storage unit, and the storage unit may be a memory. The storage unit is configured to store instructions, and the processing unit executes the instructions stored in the storage unit, so that the terminal device implements the communication method described in any one of the third aspect or the possible implementations of the third aspect, or the terminal device implements the communication method described in any one of the fourth aspect or the possible implementations of the fourth aspect.

For example, the communication unit is configured to send a first message to a session management function SMF network element, where the first message is used to request a protocol data unit to establish or update a protocol data unit PDU session, the first message includes first indication information, and the first indication information is indication information used to indicate that the terminal device supports a QUIC capability, or indication information used to indicate that the terminal device supports a MP-QUIC capability. The communication unit is further configured to receive a second message from the SMF network element, where the second message is used to indicate that the PDU session is successfully established or updated, the second message includes second indication information, and the second indication information is used to indicate that a traffic flow in the PDU session is transmitted by using a QUIC method, or is used to indicate that a traffic flow in the PDU session is transmitted by using an MP-QUIC method.

Alternatively, for example, the communication unit is configured to send a first message and first indication information to a session management function SMF network element, where the first message is used to request a protocol data unit to establish or update a protocol data unit PDU session, and the first indication information is indication information used to indicate that the terminal device supports a QUIC capability, or indication information used to indicate that the terminal device supports a MP-QUIC capability. The communication unit is further configured to receive a second message and second indication information from the SMF network element, where the second message is used to indicate that the PDU session is successfully established or updated, and the second indication information is used to indicate that a traffic flow in the PDU session is transmitted by using a QUIC method, or is used to indicate that a traffic flow in the PDU session is transmitted by using an MP-QUIC method.

For specific content of the indication information used to indicate that the terminal device supports the QUIC capability, the indication information used to indicate that the terminal device supports the MP-QUIC capability, the second indication information, the QUIC function parameter, and the MP-QUIC function parameter in the seventh aspect, refer to the specific content in the first aspect. Details are not described herein again.

In a possible implementation, the apparatus further includes the processing unit. The processing unit is configured to establish a QUIC connection or an MP-QUIC connection to a user plane function UPF network element based on the second message; and the processing unit is further configured to perform data transmission by using the QUIC connection or the MP-QUIC connection.

In a possible implementation, the second message further includes a traffic flow identifier or an application identifier, and the processing unit is specifically configured to transmit, by using the QUIC connection or the MP-QUIC connection, a traffic flow data packet corresponding to the traffic flow identifier or the application identifier.

In a possible implementation, the processing unit is specifically configured to perform QUIC packet header encapsulation or MP-QUIC packet header encapsulation on a to-be-transmitted data packet, where a QUIC packet header includes at least one of the QUIC function parameter, or an MP-QUIC packet header includes at least one of the MP-QUIC function parameter. The communication unit is further configured to send an encapsulated QUIC packet or an encapsulated MP-QUIC packet to the UPF network element.

When the communication apparatus is the chip in the terminal device, the processing unit may be a processor, and the communication unit may be a communication interface, for example, an input/output interface, a pin, or a circuit. The processing unit executes instructions stored in a storage unit, so that the terminal device implements the communication method described in any one of the third aspect or the possible implementations of the third aspect, or the terminal device implements the communication method described in any one of the fourth aspect or the possible implementations of the fourth aspect. The storage unit may be a storage unit (for example, a register or a cache) in the chip, or may be a storage unit (for example, a read-only memory or a random access memory) that is in the terminal device and that is outside the chip.

According to an eighth aspect, an embodiment of this application provides a communication apparatus. The communication apparatus may be a UPF network element, or may be a chip or a chip system in the UPF network element. The communication apparatus may include a processing unit and a communication unit. When the communication apparatus is the UPF network element, the processing unit may be a processor, and the communication unit may be a communication interface or an interface circuit. The communication apparatus may further include a storage unit, and the storage unit may be a memory. The storage unit is configured to store instructions, and the processing unit executes the instructions stored in the storage unit, so that the UPF network element implements the communication method described in any one of the fifth aspect or the possible implementations of the fifth aspect.

For example, the communication unit is configured to receive QUIC method indication information or MP-QUIC method indication information from a session management function SMF network element, where the QUIC method indication information is used to indicate that a traffic flow in a protocol data unit PDU session is transmitted by using a QUIC method, or the MP-QUIC method indication information is used to indicate that a traffic flow in a PDU session is transmitted by using an MP-QUIC method. The processing unit is configured to establish a QUIC connection or an MP-QUIC connection to a terminal device based on the QUIC method indication information or the MP-QUIC method indication information.

In a possible implementation, the processing unit is specifically configured to: allocate a QUIC function parameter or an MP-QUIC function parameter based on the QUIC method indication information or the MP-QUIC method indication information; and establish the QUIC connection or the MP-QUIC connection to the terminal device by using the QUIC function parameter or the MP-QUIC function parameter; and the communication unit is further configured to send the QUIC function parameter or the MP-QUIC function parameter to the SMF network element.

In a possible implementation, the communication unit is further configured to receive a QUIC function parameter or an MP-QUIC function parameter from the SMF network element, where the QUIC function parameter or the MP-QUIC function parameter is allocated by the SMF network element. The processing unit is specifically configured to establish a QUIC connection or an MP-QUIC connection to a terminal device by using the QUIC function parameter or the MP-QUIC function parameter.

For specific content of the indication information used to indicate that the terminal device supports the QUIC capability, the indication information used to indicate that the terminal device supports the MP-QUIC capability, the second indication information, the QUIC function parameter, and the MP-QUIC function parameter in the eighth aspect, refer to the specific content in the first aspect. Details are not described herein again.

In a possible implementation, the communication unit is further configured to receive a data packet from the terminal device, where the data packet is a data packet obtained after the terminal device performs QUIC packet header encapsulation or MP-QUIC packet header encapsulation, and a QUIC packet header includes at least one of the QUIC function parameter, or an MP-QUIC packet header includes at least one of the MP-QUIC function parameter.

When the communication apparatus is the chip or the chip system in the UPF network element, the processing unit may be a processor, and the communication unit may be a communication interface. For example, the communication interface may be an input/output interface, a pin, or a circuit. The processing unit executes instructions stored in a storage unit, so that the UPF network element implements the communication method described in any one of the fifth aspect or the possible implementations of the fifth aspect. The storage unit may be a storage unit (for example, a register or a cache) in the chip, or may be a storage unit (for example, a read-only memory or a random access memory) that is in the UPF network element and that is outside the chip.

According to a ninth aspect, an embodiment of this application provides a computer-readable storage medium. The computer-readable storage medium stores a computer program or instructions. When the computer program or the instructions is or are run on a computer, the computer is enabled to perform the communication method described in any one of the first aspect or the possible implementations of the first aspect.

According to a tenth aspect, an embodiment of this application provides a computer-readable storage medium. The computer-readable storage medium stores a computer program or instructions. When the computer program or the instructions is or are run on a computer, the computer is enabled to perform the communication method described in any one of the second aspect or the possible implementations of the second aspect.

According to an eleventh aspect, an embodiment of this application provides a computer-readable storage medium. The computer-readable storage medium stores a computer program or instructions. When the computer program or the instructions is or are run on a computer, the computer is enabled to perform the communication method described in any one of the third aspect or the possible implementations of the third aspect.

According to a twelfth aspect, an embodiment of this application provides a computer-readable storage medium. The computer-readable storage medium stores a computer program or instructions. When the computer program or the instructions is or are run on a computer, the computer is enabled to perform the communication method described in any one of the fourth aspect or the possible implementations of the fourth aspect.

According to a thirteenth aspect, an embodiment of this application provides a computer-readable storage medium. The computer-readable storage medium stores a computer program or instructions. When the computer program or the instructions is or are run on a computer, the computer is enabled to perform the communication method described in any one of the fifth aspect or the possible implementations of the fifth aspect.

According to a fourteenth aspect, an embodiment of this application provides a computer program product including instructions. When the instructions are run on a computer, the computer is enabled to perform the communication method described in any one of the first aspect or the possible implementations of the first aspect.

According to a fifteenth aspect, an embodiment of this application provides a computer program product including instructions. When the instructions are run on a computer, the computer is enabled to perform the communication method described in any one of the second aspect or the possible implementations of the second aspect.

According to a sixteenth aspect, an embodiment of this application provides a computer program product including instructions. When the instructions are run on a computer, the computer is enabled to perform the communication method described in any one of the third aspect or the possible implementations of the third aspect.

According to a seventeenth aspect, this application provides a computer program product including instructions. When the instructions are run on a computer, the computer is enabled to perform the communication method described in any one of the fourth aspect or the possible implementations of the fourth aspect.

According to an eighteenth aspect, an embodiment of this application provides a computer program product including instructions. When the instructions are run on a computer, the computer is enabled to perform the communication method described in any one of the fifth aspect or the possible implementations of the fifth aspect.

According to a nineteenth aspect, an embodiment of this application provides a communication system. The communication system includes any one or both of the following: the SMF network element described in the sixth aspect and the possible implementations of the sixth aspect and the UPF network element described in the eighth aspect and the possible implementations of the eighth aspect.

In a possible implementation, the communication system may further include the terminal device described in the seventh aspect and the possible implementations of the seventh aspect.

According to a twentieth aspect, an embodiment of this application provides a communication apparatus. The communication apparatus includes a processor and a storage medium. The storage medium stores instructions; and when the instructions are run by the processor, the communication method described in any one of the first aspect or the possible implementations of the first aspect is implemented.

According to a twenty-first aspect, an embodiment of this application provides a communication apparatus. The communication apparatus includes a processor and a storage medium. The storage medium stores instructions; and when the instructions are run by the processor, the communication method described in any one of the second aspect or the possible implementations of the second aspect is implemented.

According to a twenty-second aspect, an embodiment of this application provides a communication apparatus. The communication apparatus includes a processor and a storage medium. The storage medium stores instructions; and when the instructions are run by the processor, the communication method described in any one of the third aspect or the possible implementations of the third aspect is implemented.

According to a twenty-third aspect, an embodiment of this application provides a communication apparatus. The communication apparatus includes a processor and a storage medium. The storage medium stores instructions; and when the instructions are run by the processor, the communication method described in any one of the fourth aspect or the possible implementations of the fourth aspect is implemented.

According to a twenty-fourth aspect, an embodiment of this application provides a communication apparatus. The communication apparatus includes a processor and a storage medium. The storage medium stores instructions; and when the instructions are run by the processor, the communication method described in any one of the fifth aspect or the possible implementations of the fifth aspect is implemented.

According to a twenty-fifth aspect, this application provides a chip or a chip system. The chip or the chip system includes at least one processor and a communication interface. The communication interface and the at least one processor are interconnected through a line. The at least one processor is configured to run a computer program or instructions, to perform the communication method described in any one of the first aspect or the possible implementations of the first aspect.

According to a twenty-sixth aspect, this application provides a chip or a chip system. The chip or the chip system includes at least one processor and a communication interface. The communication interface and the at least one processor are interconnected through a line. The at least one processor is configured to run a computer program or instructions, to perform the communication method described in any one of the second aspect or the possible implementations of the second aspect.

According to a twenty-seventh aspect, this application provides a chip or a chip system. The chip or the chip system includes at least one processor and a communication interface. The communication interface and the at least one processor are interconnected through a line. The at least one processor is configured to run a computer program or instructions, to perform the communication method described in any one of the third aspect or the possible implementations of the third aspect.

According to a twenty-eighth aspect, this application provides a chip or a chip system. The chip or the chip system includes at least one processor and a communication interface. The communication interface and the at least one processor are interconnected through a line. The at least one processor is configured to run a computer program or instructions, to perform the communication method described in any one of the fourth aspect or the possible implementations of the fourth aspect.

According to a twenty-ninth aspect, this application provides a chip or a chip system. The chip or the chip system includes at least one processor and a communication interface. The communication interface and the at least one processor are interconnected through a line. The at least one processor is configured to run a computer program or instructions, to perform the communication method described in any one of the fifth aspect or the possible implementations of the fifth aspect.

The communication interface in the chip may be an input/output interface, a pin, a circuit, or the like.

In a possible implementation, the chip or the chip system described in this application further includes at least one memory, and the at least one memory stores instructions. The memory may be a storage unit inside the chip, for example, a register or a cache, or may be a storage unit (for example, a read-only memory or a random access memory) of the chip.

It should be understood that the second aspect to the twenty-ninth aspect in embodiments of this application correspond to the technical solutions of the first aspect in embodiments of this application, and beneficial effects achieved in the aspects and feasible implementations corresponding to the aspects are similar. Details are not described again.

### BRIEF DESCRIPTION OF DRAWINGS

FIG. 1 is a schematic diagram of existing multi-PDU session access;
FIG. 2 is a schematic diagram of a network architecture according to an embodiment of this application;
FIG. 3 is another schematic diagram of a network architecture according to an embodiment of this application;
FIG. 4 is a schematic flowchart of a communication method according to an embodiment of this application;
FIG. 5 is a schematic flowchart of another communication method according to an embodiment of this application;
FIG. 6 is a schematic flowchart of still another communication method according to an embodiment of this application;
FIG. 7 is a schematic flowchart of yet another communication method according to an embodiment of this application;
FIG. 8 is a schematic diagram of a structure of a communication apparatus according to an embodiment of this application;
FIG. 9 is a schematic diagram of a structure of a communication device according to an embodiment of this application;
FIG. 10 is a schematic diagram of a structure of a terminal according to an embodiment of this application; and
FIG. 11 is a schematic diagram of a structure of a chip according to an embodiment of this application.

### DESCRIPTION OF EMBODIMENTS

To clearly describe the technical solutions in embodiments of this application, terms such as "first" and "second" are used in embodiments of this application to distinguish between same items or similar items that provide basically same functions or purposes. For example, a first network and a second network are merely intended to distinguish between different networks, and are not intended to limit a sequence thereof. A person skilled in the art may understand that the terms such as "first" and "second" do not limit a quantity or an execution sequence, and the terms such as "first" and "second" do not indicate a definite difference.

It should be noted that, in this application, words such as "example" or "for example" are used to represent giving an example, an illustration, or a description. Any embodiment or design scheme described as an "example" or "for example" in this application should not be explained as being more preferred or having more advantages than another embodiment or design scheme. Exactly, use of the word "example" or "for example" or the like is intended to present a relative concept in a specific manner.

In this application, the term "at least one" means one or more, and the term "a plurality of" means two or more. The term "and/or" describes an association relationship between associated objects and represents that three relationships may exist. For example, A and/or B may represent the following cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

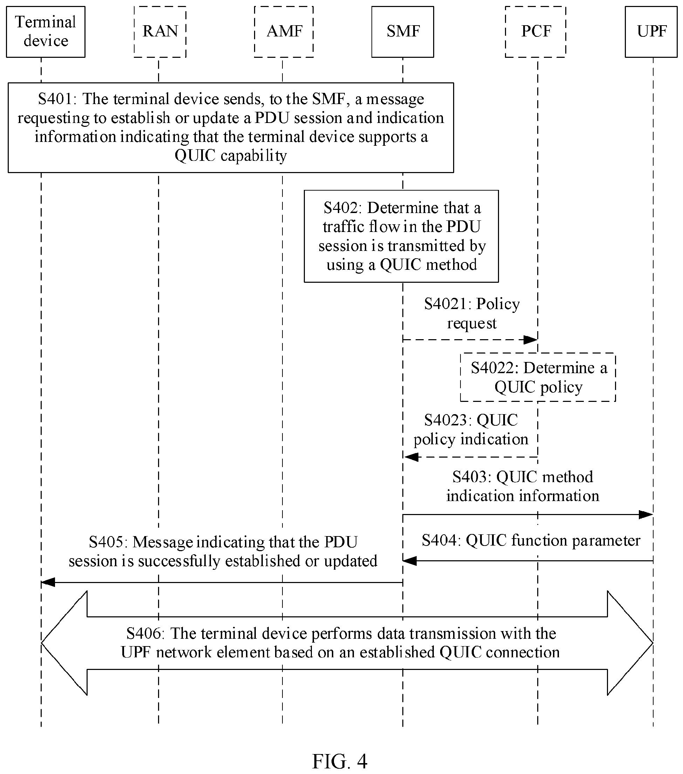

Embodiments of this application provide a communication method. The method in embodiments of this application may be applied to a long term evolution (long term evolution, LTE) system, or may be applied to a 5th generation (5th generation, 5G) mobile communication system, or may be applied to a future mobile communication system. The claimed invention corresponds to fig. 4-7 and to the related text in the description. The remaining figures and the text of the description are intended to better explain the invention.

For example, FIG. 2 is a schematic diagram of a network architecture according to an embodiment of this application. The architecture supports access to a core network (core network, CN) by using a wireless technology (for example, LTE or a 5G radio access network (radio access network, RAN)) that is defined by the 3rd generation partnership project (3rd generation partnership project, 3GPP) standard group, and supports access to the core network by using a non-3GPP access technology through a non-3GPP interworking function (non-3GPP interworking function, N3IWF) or a next generation access gateway (next generation packet data gateway, ngPDG).

The network architecture includes a terminal device, an access network (access network, AN), a core network, and a data network (data network, DN). An access network apparatus is mainly configured to implement functions such as a radio physical layer function, resource scheduling, radio resource management, radio access control, and mobility management. A core network device may include a management device and a gateway device. The management device is mainly used for device registration, security authentication, mobility management, location management, and the like of the terminal device. The gateway device is mainly configured to establish a channel with the terminal device, and forward a data packet between the terminal device and an external data network on the channel. The data network may include a network device (for example, a device such as a server or a router), and the data network is mainly used to provide a plurality of data services for the terminal device. For example, an access network, a core network, and a data network in 5G are used as examples for description.

The access network in 5G may be a radio access network (radio access network, (R)AN). A (R)AN device in the 5G system may include a plurality of 5G-(R)AN nodes. The 5G-(R)AN node may include an access point (access point, AP) in a 3GPP access network or a non-3GPP access network such as a Wi-Fi network, a next generation base station (which may be collectively referred to as a next generation radio access network node (NG-RAN node), where the next generation base station includes a new radio NodeB (NR NodeB, gNB), a next generation evolved NodeB (NG-eNB), a central unit (central unit, CU), and a distributed unit (distributed unit, DU), a gNB in a separated form, and the like), a transmission reception point (transmission reception point, TRP), a transmission point (transmission point, TP), or another node.

The 5G core network (5G core/new generation core, 5GC/NGC) includes a plurality of functional units such as an access and mobility management function (access and mobility management function, AMF) network element, a session management function (session management function, SMF) network element, a user plane function (user plane function, UPF) network element, an authentication server function (authentication server function, AUSF) network element, a policy control function (policy control function, PCF) network element, an application function (application function, AF) network element, a unified data management (unified data management, UDM) function network element, a network slice selection function (network slice selection function, NSSF) network element, and a network exposure function (network exposure function, NEF) network element.

The AMF network element is mainly responsible for services such as mobility management and access management. The SMF network element is mainly responsible for session management, a dynamic host configuration protocol function, user plane function selection and control, and the like. The UPF network element is mainly responsible for functions related to external connection to a data network (data network, DN), user plane data packet routing and forwarding, packet filtering, quality of service (quality of service, QoS) control, and the like. The DN mainly provides a service for user equipment, for example, provides a mobile operator service, an internet service, or a third-party service. The AUSF network element is mainly responsible for a function of authenticating the terminal device. The PCF network element is mainly responsible for providing a unified policy framework for network behavior management, providing a policy rule for a control plane function, obtaining registration information related to policy decision, and the like. It should be noted that these functional units may independently work, or may be combined to implement some control functions, such as access control and mobility management functions such as access authentication, security encryption, and location registration of the terminal device, and session management functions such as establishment, release, and change of a user plane transmission path. The UDM network element is used for unified user data management, and is mainly configured to store user equipment subscription data.

Functional units in the 5G system may communicate with each other through a next generation (next generation, NG) network interface. For example, the terminal device may transmit a control plane message with the AMF network element through an NG interface 1 (N1 for short). The RAN device may establish a user plane communication connection to the UPF through an NG interface 3 (N3 for short). The AN/RAN device may establish a control plane signaling connection to the AMF network element through an NG interface 2 (N2 for short). The UPF may exchange information with the SMF network element through an NG interface 4 (N4 for short). The UPF may exchange user plane data with the data network DN through an NG interface 6 (N6 for short). The AMF network element may exchange information with the SMF network element through an NG interface 11 (N11 for short). The SMF network element may exchange information with the PCF network element through an NG interface 7 (N7 for short). The AMF network element may exchange information with the AUSF through an NG interface 12 (N12 for short).

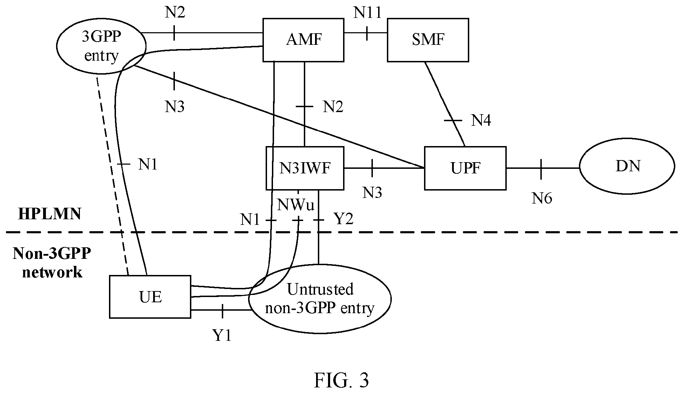

For example, FIG. 3 is a schematic diagram of a specific network architecture when a core network supports untrusted non-3GPP access (untrusted non-3GPP access). A network architecture in a home public land mobile network (home public land mobile network, HPLMN) is similar to the implementation in FIG. 2, and details are not described herein again. The untrusted non-3GPP access may be untrusted wireless local area network (wireless local area network, WLAN) access. In this architecture, the terminal device may further exchange information with the AMF by using the untrusted non-3GPP access, the non-3GPP interworking function (Non-3GPP interworking function, N3IWF), or a non-3GPP access gateway, and an N3IWF network element may exchange information with the UPF through the N3.

In addition, the core network may further support trusted non-3GPP access and/or fixed network access. A trusted non-3GPP network includes a trusted WLAN network, and a fixed network includes fixed home network access and the like. A network side architecture is similar to an untrusted non-3GPP network architecture. The N3IWF and an untrusted access network are replaced with a trusted non-3GPP access network, or the N3IWF is replaced with a trusted non-3GPP access gateway, and the untrusted access network is replaced with a trusted access network. An access network device between the terminal device and the trusted non-3GPP access gateway may include a WLAN AP, a fixed access network (fixed access network, FAN) device, a switch, a router, and the like.

Regardless of the trusted non-3GPP access or the untrusted non-3GPP access, a point-to-point interface protocol shown in FIG. 2 may be used on a core network side, or a service-based interface architecture consistent with a 3GPP access core network architecture is used. This is not specifically limited in embodiments of this application.

In a possible implementation, the 3GPP access technology and the non-3 GPP access technology may include a plurality of access standards or frequency bands, and may be simultaneously used. For example, 3GPP access includes simultaneous access to the 5GC by using two access technologies: LTE in 4G and NG-RAN in 5G. Non-3GPP Wi-Fi access also includes simultaneous access of two frequency bands. For example, a 5 GHz Wi-Fi frequency band and a 2.4 GHz Wi-Fi frequency band are simultaneously used to access the 5GC. In a possible implementation, UE may simultaneously access the 5GC architecture in at least two of the foregoing four access manners (where this includes that the four access manners are simultaneously used).

The method processing in embodiments of this application may be applied to the foregoing 5G 3GPP access architecture, a non-3GPP access architecture, or an architecture in which 3GPP access and non-3GPP access are simultaneously performed, or may be applied to an architecture in which 5G cellular (NG-RAN) access and 4G cellular (LTE) access are simultaneously performed, and so on. A network architecture is not specifically limited in embodiments of this application. In addition, FIG. 2 and FIG. 3 are merely examples of architectural diagrams. In addition to the functional units shown in FIG. 2 and FIG. 3, the network architecture may further include another functional unit.

The following describes some terms in embodiments of this application.

Data transmission in embodiments of this application may include a data sending process, a data receiving process, or a data exchange process. For example, data transmission performed between the terminal device and the UPF network element may include: The terminal device sends data to the UPF network element, or the UPF network element sends data to the terminal device, or the terminal device sends data to the UPF network element and receives data from the UPF, or the UPF network element sends data to the terminal device and receives data from the UPF network element.

A first message sent by the terminal device to the SMF network element in embodiments of this application may be a message requesting to establish or update a PDU session, or may be a message requesting to establish or update a PDU session sent for establishing a multi-access PDU (multi-access PDU, MA PDU) session, or may be any other message. This is not specifically limited in embodiments of this application. The first message sent by the terminal device to the SMF network element may be used to request to establish or update the PDU session.

The terminal device in embodiments of this application may support a QUIC capability or an MP-QUIC capability. If the terminal device supports the QUIC capability, the terminal device may subsequently establish a QUIC connection by using a QUIC protocol. If the terminal device supports the MP-QUIC capability, the terminal device may subsequently establish an MP-QUIC connection by using an MP-QUIC protocol. Each parameter in the QUIC connection may be used for the MP-QUIC connection. A difference between the MP-QUIC connection and the QUIC connection lies in that the MP-QUIC connection includes a plurality of sub-connections. A manner of establishing the sub-connection is described in a subsequent part corresponding to the MP-QUIC connection. Details are not described herein again.

The QUIC is a UDP-based low-delay internet transport layer protocol. When a transmit end needs to transmit data by using the QUIC connection, the transmit end needs to first establish the QUIC connection to a receive end, and then process the to-be-transmitted data. The QUIC connection may support one or more access technologies or tunnels.

The MP-QUIC is a UDP-based low-delay multi-path internet transport layer protocol. When a transmit end needs to transmit data by using the MP-QUIC connection, the transmit end needs to first establish the MP-QUIC connection to a receive end, and then process the to-be-transmitted data. The MP-QUIC connection includes a plurality of sub-connections, the sub-connections may correspond to sub-connection identifiers, and the sub-connections may support different access technologies or tunnels.

In a possible implementation, the QUIC connection may be a QUIC connection at a flow granularity. For example, one QUIC connection is established for one traffic flow, or one QUIC connection can be used by only one traffic flow. The MP-QUIC connection may be an MP-QUIC connection at a flow granularity. For example, one MP-QUIC connection is established for one traffic flow, or one MP-QUIC connection can be used by only one traffic flow.

First indication information in embodiments of this application may be included in the first message for sending. Alternatively, the first indication information may not be included in the first message for sending. For example, both the first indication information and the first message may be encapsulated in a non-access stratum (non-access stratum, NAS) transmission message for sending. This is not specifically limited in embodiments of this application.

When the terminal device supports the QUIC capability, the first indication information may include indication information used to indicate that the terminal device supports the internet transport layer protocol QUIC capability. The indication information used to indicate that the terminal device supports the QUIC capability may be a parameter in any form or the like. This is not specifically limited in embodiments of this application.

For example, the indication information used to indicate that the terminal device supports the QUIC capability includes one or more of the following: a first QUIC connection identifier (connection ID), a QUIC capability indication parameter, a QUIC request indication parameter, or first QUIC version information, where
the first QUIC connection identifier is a QUIC connection identifier allocated by the terminal device to the QUIC connection. When the first indication information includes the first QUIC connection identifier, it may indicate that the terminal device not only has a capability of supporting the QUIC, but also allocates a connection identifier to a QUIC connection that may be established. If the QUIC connection is subsequently established, the terminal device may perform QUIC packet header encapsulation on a traffic flow by using the first QUIC connection identifier, or the like. During specific application, the first QUIC connection identifier may be a character, a digit, or the like.

The QUIC capability indication parameter may be used to indicate that the terminal device has the capability of supporting the QUIC. For example, if the terminal device supports the QUIC protocol, it is considered that the terminal device has the capability of supporting the QUIC. When the first indication information includes the QUIC capability indication parameter, it may indicate that the terminal device has the capability of supporting the QUIC. If the first indication information includes the QUIC capability indication parameter, and a QUIC connection is subsequently established, the terminal device may perform QUIC packet header encapsulation on a traffic flow by using the connection identifier allocated by a network side to the QUIC connection, or the like. During specific application, the QUIC capability indication parameter may be specifically a character, a digit, or the like.

The QUIC request indication parameter may be used to indicate that the terminal device requests the QUIC connection. When the first indication information includes the QUIC request indication parameter, it may indicate that the terminal device has the capability of supporting the QUIC. If the first indication information includes only the QUIC request indication parameter, and a QUIC connection is subsequently established, the terminal device may perform QUIC packet header encapsulation on a traffic flow by using the connection identifier allocated by a network side to the QUIC connection, or the like. During specific application, the QUIC request indication parameter may be specifically a character, a digit, or the like.

The first QUIC version information may be used to indicate a version number or the like of the QUIC supported by the terminal device. When the first indication information includes the first QUIC version information, it may indicate that not only the terminal device has the capability of supporting the QUIC, but also a version of the supported QUIC is content corresponding to the first QUIC version information. The first QUIC version information may include one or more pieces of QUIC version information. To be specific, the terminal device may support one or more QUIC versions. If a QUIC connection is subsequently established, the network side and the terminal device may negotiate to use any QUIC version corresponding to the first QUIC version information. During specific application, the QUIC version information may be specifically a character, a digit, or the like.

In a possible implementation, when the indication information used to indicate that the terminal device supports the QUIC capability includes one of the first QUIC connection identifier, a QUIC omitted connection identifier, the QUIC capability indication parameter, or the first QUIC version information, other information required for establishing the QUIC connection may be subsequently configured by the network side based on performance of the terminal device, or may be subsequently determined by the network side through negotiation with the terminal device, or may be obtained in another processing, so that the terminal device can finally establish the QUIC connection. When the indication information used to indicate that the terminal device supports the QUIC capability includes only a plurality of the first QUIC connection identifier, the QUIC capability indication parameter, or the first QUIC version information, the terminal device may establish the QUIC connection based on the plurality of pieces of information.

In a possible implementation, when the indication information used to indicate that the terminal device supports the QUIC capability may include a plurality of parameters in the first QUIC connection identifier, the QUIC capability indication parameter, or the first QUIC version information, the terminal device may establish the QUIC connection based on the plurality of pieces of information.

In a possible implementation, when the indication information used to indicate that the terminal device supports the QUIC capability may include a plurality of parameters in the QUIC omitted connection identifier, the QUIC capability indication parameter, or the first QUIC version information, the terminal device may establish the QUIC connection based on the plurality of pieces of information.

An indication parameter of the QUIC omitted connection identifier indicates that the QUIC connection does not use a connection identifier. In a possible implementation, if the first indication information includes the indication parameter of the QUIC omitted connection identifier, the connection identifier may not be used when the terminal device subsequently performs QUIC packet header encapsulation on the traffic flow after establishing the QUIC connection. During specific application, the indication parameter of the QUIC omitted connection identifier may be a character, a digit, or the like.

In a possible implementation, in the first indication information, the first QUIC connection identifier and the indication parameter of the QUIC omitted connection identifier may not be carried at the same time. When the first message carries the first QUIC connection identifier, the connection identifier may be used to subsequently establish the QUIC connection. When the first message carries the indication parameter of the QUIC omitted connection identifier, the connection identifier may not be used to subsequently establish the QUIC connection.

In a possible implementation, the first indication information may include one or more of the indication parameter of the QUIC omitted connection identifier, the QUIC capability indication parameter, or the first QUIC version information. Alternatively, it may be understood that the indication parameter of the QUIC omitted connection identifier and the QUIC capability indication parameter or the first QUIC version information may be included in the first indication information at the same time.

When the terminal device supports the MP-QUIC capability, the indication information used to indicate that the terminal device supports the MP-QUIC capability includes one or more of the following: a first MP-QUIC connection identifier, an MP-QUIC capability indication parameter, an MP-QUIC request indication parameter, or first MP-QUIC version information, where the first MP-QUIC connection identifier is an MP-QUIC connection identifier allocated by the terminal device to the MP-QUIC connection.

The first MP-QUIC connection identifier is an MP-QUIC connection identifier allocated by the terminal device to the MP-QUIC connection. When the first indication information includes the first MP-QUIC connection identifier, it may indicate that the terminal device not only has a capability of supporting the MP-QUIC, but also allocates a connection identifier to an MP-QUIC connection that may be established. If the MP-QUIC connection is subsequently established, the terminal device may perform MP-QUIC packet header encapsulation on a traffic flow by using the first MP-QUIC connection identifier, or the like. During specific application, the first MP-QUIC connection identifier may be a character, a digit, or the like.

The MP-QUIC capability indication parameter may be used to indicate that the terminal device has the capability of supporting the MP-QUIC. For example, if the terminal device supports the MP-QUIC protocol, it is considered that the terminal device has the capability of supporting the MP-QUIC. When the first indication information includes the MP-QUIC capability indication parameter, it may indicate that the terminal device has the capability of supporting the MP-QUIC. If the first indication information includes the MP-QUIC capability indication parameter, if an MP-QUIC connection is subsequently established, the terminal device may perform MP-QUIC packet header encapsulation on a traffic flow by using the connection identifier allocated by a network side to the MP-QUIC connection, or the like. During specific application, the MP-QUIC capability indication parameter may be specifically a character, a digit, or the like.

The MP-QUIC request indication parameter may be used to indicate that the terminal device requests the MP-QUIC connection. When the first indication information includes the MP-QUIC request indication parameter, it may indicate that the terminal device has the capability of supporting the MP-QUIC. If the first indication information includes only the MP-QUIC request indication parameter, and an MP-QUIC connection is subsequently established, the terminal device may perform MP-QUIC packet header encapsulation on a traffic flow by using the connection identifier allocated by a network side to the MP-QUIC connection, or the like. During specific application, the MP-QUIC request indication parameter may be specifically a character, a digit, or the like.

The first MP-QUIC version information may be used to indicate a version number or the like of the MP-QUIC supported by the terminal device. When the first indication information includes the first MP-QUIC version information, it may indicate that not only the terminal device has the capability of supporting the MP-QUIC, but also a version of the supported MP-QUIC is content corresponding to the first MP-QUIC version information. The first MP-QUIC version information may include one or more pieces of MP-QUIC version information. To be specific, the terminal device may support one or more MP-QUIC versions. If an MP-QUIC connection is subsequently established, the network side and the terminal device may negotiate to use any MP-QUIC version corresponding to the first MP-QUIC version information. During specific application, the MP-QUIC version information may be specifically a character, a digit, or the like.

In a possible implementation, when the indication information used to indicate that the terminal device supports the MP-QUIC capability includes one of the first MP-QUIC connection identifier, an MP-QUIC omitted connection identifier, the MP-QUIC capability indication parameter, or the first MP-QUIC version information, other information required for establishing the MP-QUIC connection may be subsequently configured by the network side based on performance of the terminal device, or may be subsequently determined by the network side through negotiation with the terminal device, or may be determined in another processing, so that the terminal device can finally establish the MP-QUIC connection. When the indication information used to indicate that the terminal device supports the MP-QUIC capability includes only a plurality of the first MP-QUIC connection identifier, the MP-QUIC capability indication parameter, or the first MP-QUIC version information, the terminal device may establish the MP-QUIC connection based on the plurality of pieces of information.

In a possible implementation, when the indication information used to indicate that the terminal device supports the MP-QUIC capability may include a plurality of parameters in the first MP-QUIC connection identifier, the MP-QUIC capability indication parameter, or the first MP-QUIC version information, the terminal device may establish the MP-QUIC connection based on the plurality of pieces of information.

In a possible implementation, when the indication information used to indicate that the terminal device supports the MP-QUIC capability may include a plurality of parameters in the MP-QUIC omitted connection identifier, the MP-QUIC capability indication parameter, or the first MP-QUIC version information, the terminal device may establish the MP-QUIC connection based on the plurality of pieces of information.

An indication parameter of the MP-QUIC omitted connection identifier indicates that the MP-QUIC connection does not use a connection identifier. In a possible implementation, if the first indication information includes the indication parameter of the MP-QUIC omitted connection identifier, the connection identifier may not be used when the terminal device subsequently performs MP-QUIC packet header encapsulation on the traffic flow after establishing the MP-QUIC connection. During specific application, the indication parameter of the MP-QUIC omitted connection identifier may be a character, a digit, or the like.

In a possible implementation, in the first indication information, the first MP-QUIC connection identifier and the indication parameter of the MP-QUIC omitted connection identifier may not be carried at the same time. When the first message carries the first MP-QUIC connection identifier, the connection identifier may be used to subsequently establish the MP-QUIC connection. When the first message carries the indication parameter of the MP-QUIC omitted connection identifier, the connection identifier may not be used to subsequently establish the MP-QUIC connection.

In a possible implementation, the first indication information may include one or more of the indication parameter of the MP-QUIC omitted connection identifier, the MP-QUIC capability indication parameter, or the first MP-QUIC version information, and it may also be understood that the indication parameter of the MP-QUIC omitted connection identifier and the MP-QUIC capability indication parameter or the first MP-QUIC version information may be included in the first indication information at the same time.

A second message received by the terminal device from the SMF network element in embodiments of this application may be a PDU session establishment success message, a PDU session update success message, or any other message. This is not specifically limited in embodiments of this application. The second message received by the terminal device from the SMF network element may be used to indicate that the PDU session is successfully established or updated.

Second indication information in embodiments of this application may be included in the second message for sending. Alternatively, the second indication information may not be included in the second message for sending. For example, both the second indication information and the second message may be encapsulated in a NAS transmission message for sending. This is not specifically limited in embodiments of this application.

The second indication information may include QUIC method indication information or MP-QUIC method indication information, where the QUIC method indication information is used to indicate that the traffic flow in the PDU session is transmitted by using a QUIC method, or the MP-QUIC method indication information is used to indicate that the traffic flow in the PDU session is transmitted by using an MP-QUIC method.

The QUIC method indication information may be a character, a digit, or the like.

That the traffic flow in the PDU session is transmitted by using the QUIC method may be specifically as follows: When one or more traffic flows in the PDU session are transmitted, the traffic flows are encapsulated by using a QUIC packet header and then transmitted in the QUIC connection.

The MP-QUIC method indication information may be a character, a digit, or the like.

That the traffic flow in the PDU session is transmitted by using the MP-QUIC method may be specifically as follows: When one or more traffic flows in the PDU session are transmitted, the traffic flows are encapsulated by using an MP-QUIC packet header and then transmitted in the MP-QUIC connection.

In a possible implementation, the second message may further include a traffic flow identifier and/or an application identifier. The traffic flow identifier may be an internet protocol (internet protocol, IP) 5-tuple (a source IP address, a destination IP address, a source port number, a destination port number, or a protocol type), a PDU session identifier (when all traffic flows in the PDU session are transmitted by using the QUIC connection), or the like. The application identifier is used to identify a traffic flow of a specific application. Subsequently, the terminal device may transmit, by using the QUIC connection or the MP-QUIC connection, the traffic flow corresponding to the traffic flow identifier or the application identifier.

In a possible implementation, after receiving the QUIC method indication information or the MP-QUIC method indication information, the terminal device may further send a QUIC message, an MP-QUIC message, or the like to the UPF network element, to obtain, from the UPF network element, a parameter required for establishing the QUIC connection or the MP-QUIC connection, to establish the QUIC connection or the MP-QUIC connection to the UPF network element.

In a possible implementation, the second indication information may include a QUIC function parameter (QUIC function information) or an MP-QUIC function parameter (MP-QUIC function information), and the terminal device may establish the QUIC connection or the MP-QUIC connection to the UPF network element when establishing the PDU session. During specific application, the QUIC function parameter or the MP-QUIC function parameter may be configured by the SMF network element or the UPF network element for the terminal device. The QUIC function parameter may also be referred to as a QUIC connection-related parameter, a QUIC connection parameter, or the like. The MP-QUIC function parameter may also be referred to as an MP-QUIC connection-related parameter, an MP-QUIC connection parameter, or the like.

The QUIC function parameter includes a security parameter. In a possible implementation, the QUIC function parameter may further include one or more of the following: a QUIC function IP address, a QUIC function port number, a second QUIC connection identifier, second QUIC version information, or a transmission parameter.

The QUIC function IP address is an IP address used for the QUIC connection, for example, an IP address of a QUIC function (or referred to as a QUIC proxy function) on a network side, for example, an IP address corresponding to a QUIC function (or a QUIC proxy function) implemented on the UPF network element. For example, when performing QUIC encapsulation on the traffic flow, the terminal device may encapsulate the QUIC function IP address. During specific application, the QUIC function IP address may be data used to identify an address, such as a character or a digit.

The QUIC function port may be used to indicate a port number corresponding to the QUIC connection, including a port number corresponding to a network-side QUIC function and/or a port number corresponding to a terminal-side QUIC function. During specific application, the QUIC function port may be data used to identify a port number, such as a character or a digit.

The second QUIC connection identifier is a connection identifier allocated by the SMF network element or the UPF network element to one QUIC connection, and may be used together with the first QUIC connection identifier allocated by the terminal device to identify one QUIC connection, or may identify one QUIC connection based on the second connection identifier. In a possible implementation, if the UPF network element receives a first QUIC connection identifier, the UPF network element may store the first QUIC connection identifier. Subsequently, the UPF network element may encapsulate a service data packet by using at least one of the first QUIC connection identifier or the second QUIC connection identifier, for example, encapsulate the service data packet by using a QUIC protocol header, and include the first QUIC connection identifier or the second QUIC connection identifier in the QUIC protocol header, or include both the first QUIC connection identifier and the second QUIC connection identifier in the QUIC protocol header.

The second QUIC version information is a QUIC version used by the QUIC connection. The second QUIC version information may be QUIC version information supported by the SMF network element or the UPF network element, or QUIC version information determined by the SMF network element or the UPF network element based on version information supported by the terminal device. For example, any version information that is also supported by the network side and that is in the version information supported by the terminal device is selected as the second QUIC version information. For example, the second QUIC version information may be any piece of version information in the first QUIC version information.

The security parameter includes a non-encryption indication (for example, indicating an empty encryption algorithm to indicate that encryption is not performed). In other examples that are not according to the claims, the security parameter may be used to encrypt data transmitted in the QUIC connection. For example, the security parameter may include encryption algorithm information, an encryption indication, a security certificate, or the like. During specific application, the security parameter may be a character, a digit, or the like.

The transmission parameter may be used to control a transmission process of the QUIC connection. The transmission parameter may be, for example, original_connection_id, max_idle_timeout, initial_max_data, initial_max_stream_data_bidi_local, initial_max_stream_data_bidi_remote, initial_max_stream_data_uni, initial_max_streams_bidi, initial_max_streams_uni, ack_delay_exponent, max_ack_delay, disable_active_migration, preferred_address, active_connection_id_limit, idle_timeout, stateless_reset_token, or max_packet_size. For details, refer to a definition of the transmission parameter in the QUIC protocol. Details are not described herein again.

The QUIC function parameter includes a security parameter. In a possible implementation, the QUIC function parameter further includes one or more of the following: a QUIC function IP address, a QUIC function port number, an indication parameter of a QUIC omitted connection identifier, second QUIC version information, or a transmission parameter.

The indication parameter of the QUIC omitted connection identifier indicates that the QUIC connection does not use a connection identifier. If the QUIC function parameter includes the indication parameter of the QUIC omitted connection identifier, the connection identifier may not be used when the terminal device subsequently performs QUIC packet header encapsulation on the traffic flow after establishing the QUIC connection. If the UPF network element receives the indication parameter of the QUIC omitted connection identifier, the UPF network element may not include the connection identifier in a QUIC packet header when encapsulating the data by using the QUIC protocol header.

In a possible implementation, in the QUIC function parameter, the second QUIC connection identifier and the indication parameter of the QUIC omitted connection identifier may not be carried at the same time. When the QUIC function parameter carries the second QUIC connection identifier, the connection identifier may be used to subsequently establish the QUIC connection. When the QUIC function parameter carries the indication parameter of the QUIC omitted connection identifier, the connection identifier may not be used to subsequently establish the QUIC connection.

In a possible implementation, the QUIC function parameter may carry one or more of an indication parameter of a QUIC omitted connection identifier, a QUIC function IP address, a QUIC function port number, second QUIC version information, a security parameter, or a transmission parameter. Alternatively, it may be understood that the indication parameter of the QUIC omitted connection identifier, the QUIC function IP address, the QUIC function port number, the second QUIC version information, the security parameter, or the transmission parameter may be carried in the QUIC function parameter.

The MP-QUIC function parameter includes a security parameter. The MP-QUIC function parameter may further include one or more of the following: an MP-QUIC function IP address, an MP-QUIC function port number, a second MP-QUIC connection identifier, second MP-QUIC version information, or a transmission parameter.

The MP-QUIC function IP address is an IP address used for the MP-QUIC connection, for example, an IP address of an MP-QUIC function (or referred to as an MP-QUIC proxy function) on a network side, for example, an IP address corresponding to an MP-QUIC function (or an MP-QUIC proxy function) implemented on the UPF network element. For example, when performing MP-QUIC encapsulation on the traffic flow, the terminal device may encapsulate the MP-QUIC function IP address. During specific application, the MP-QUIC function IP address may be data used to identify an address, such as a character or a digit.

The MP-QUIC function port may be used to indicate a port number corresponding to the MP-QUIC connection, including a port number corresponding to a network-side MP-QUIC function and/or a port number corresponding to a terminal-side MP-QUIC function. During specific application, the MP-QUIC function port may be data used to identify a port number, such as a character or a digit.

The second MP-QUIC connection identifier is a connection identifier allocated by the SMF network element or the UPF network element to one MP-QUIC connection, and may be used together with the first MP-QUIC connection identifier allocated by the terminal device to identify one MP-QUIC connection, or may identify one MP-QUIC connection based on the second connection identifier. In a possible implementation, if the UPF network element receives a first MP-QUIC connection identifier, the UPF network element may store the first MP-QUIC connection identifier. Subsequently, the UPF network element may encapsulate a service data packet by using at least one of the first MP-QUIC connection identifier or the second MP-QUIC connection identifier, for example, encapsulate the service data packet by using an MP-QUIC protocol header, and include the first MP-QUIC connection identifier or the second MP-QUIC connection identifier in the MP-QUIC protocol header, or include both the first MP-QUIC connection identifier and the second MP-QUIC connection identifier in the MP-QUIC protocol header.

The second MP-QUIC version information is an MP-QUIC version used by the MP-QUIC connection. The second MP-QUIC version information may be MP-QUIC version information supported by the SMF network element or the UPF network element, or MP-QUIC version information determined by the SMF network element or the UPF network element based on version information supported by the terminal device. For example, any version information that is also supported by the network side and that is in the version information supported by the terminal device is selected as the second MP-QUIC version information. For example, the second MP-QUIC version information may be any piece of version information in the first MP-QUIC version information.

The security parameter includes a non-encryption indication (for example, indicating an empty encryption algorithm to indicate that encryption is not performed). In other examples that are not according to the claims, the security parameter may be used to encrypt data transmitted in the MP-QUIC connection. For example, the security parameter may include encryption algorithm information, an encryption indication, a security certificate, or the like. During specific application, the security parameter may be a character, a digit, or the like.

The transmission parameter may be used to control a transmission process of the MP-QUIC connection. The transmission parameter may be, for example, original_connection_id, max_idle_timeout, initial_max_data, initial_max_stream_data_bidi_local, initial_max_stream_data_bidi_remote, initial_max_stream_data_uni, initial_max_streams_bidi, initial_max_streams_uni, ack_delay_exponent, max_ack_delay, disable_active_migration, preferred_address, active_connection_id_limit, idle_timeout, stateless_reset_token, or max_packet_size. For details, refer to a definition of the transmission parameter in the MP-QUIC protocol. Details are not described herein again.

The MP-QUIC function parameter includes a security parameter. In a possible implementation, the MP-QUIC function parameter further includes one or more of the following: an MP-QUIC function IP address, an MP-QUIC function port number, an indication parameter of an MP-QUIC omitted connection identifier, second MP-QUIC version information, or a transmission parameter.

The indication parameter of the MP-QUIC omitted connection identifier indicates that the MP-QUIC connection does not use a connection identifier. If the MP-QUIC function parameter includes the indication parameter of the MP-QUIC omitted connection identifier, the connection identifier may not be used when the terminal device subsequently performs MP-QUIC packet header encapsulation on the traffic flows after establishing the MP-QUIC connection. If the UPF network element receives the indication parameter of the MP-QUIC omitted connection identifier, the UPF network element may not include the connection identifier in an MP-QUIC packet header when encapsulating the data by using the MP-QUIC protocol header.

In a possible implementation, in the MP-QUIC function parameter, the second MP-QUIC connection identifier and the indication parameter of the MP-QUIC omitted connection identifier may not be carried at the same time. When the MP-QUIC function parameter carries the second MP-QUIC connection identifier, the connection identifier may be used to subsequently establish the MP-QUIC connection. When the MP-QUIC function parameter carries the indication parameter of the MP-QUIC omitted connection identifier, the connection identifier may not be used to subsequently establish the MP-QUIC connection.

In a possible implementation, the MP-QUIC function parameter may carry one or more of an indication parameter of an MP-QUIC omitted connection identifier, an MP-QUIC function IP address, an MP-QUIC function port number, second MP-QUIC version information, a security parameter, or a transmission parameter. Alternatively, it may be understood that the indication parameter of the MP-QUIC omitted connection identifier, the MP-QUIC function IP address, the MP-QUIC function port number, the second MP-QUIC version information, the security parameter, or the transmission parameter may be carried in the MP-QUIC function parameter. In a possible implementation, the MP-QUIC function parameter may further include one or more of the following: a sub-connection identifier, an access technology indication parameter, or a tunnel identifier, where the sub-connection identifier is a connection identifier of an MP-QUIC sub-connection corresponding to the access technology indication parameter.

The access technology indication parameter may indicate an access technology corresponding to a sub-connection in the MP-QUIC connection. For example, the access technology may be a 3GPP access technology, a non-3GPP access technology, a 4G cellular access technology, a 5G cellular access technology, a trusted Wi-Fi access technology, an untrusted Wi-Fi access technology, a fixed network access technology, a wired access technology, or the like. It should be noted that, during specific application, if it is on a UPF network element side, a sub-connection identifier and an access technology indication parameter, or a sub-connection identifier and a corresponding tunnel identifier are included. If it is on a terminal device side, a sub-connection identifier and an access technology indication parameter are included. The access technology indication parameter or the tunnel identifier may be a character, a digit, or the like.

The sub-connection identifier is a connection identifier of the MP-QUIC sub-connection corresponding to the access technology indication parameter. For example, the sub-connection identifier may be a connection identifier a allocated by the UPF network element or the SMF network element to an MP-QUIC sub-connection accessed through 3GPP, or a connection identifier b allocated by the UPF network element or the SMF network element to an MP-QUIC sub-connection accessed through non-3GPP. Subsequently, if the terminal device encapsulates the service data packet by using the MP-QUIC packet header, the MP-QUIC packet header may include the sub-connection identifier. For example, when a traffic flow packet is transmitted through 3GPP, the terminal device includes a sub-connection identifier (for example, an identifier a) corresponding to the 3GPP access technology to the MP-QUIC packet header. If a data packet is transmitted through non-3GPP, the terminal device includes a sub-connection identifier (for example, an identifier b) corresponding to the non-3GPP access technology in the MP-QUIC header. During specific application, the sub-connection identifier may be a character, a digit, or the like.

The following describes in detail, by using specific embodiments, the technical solutions of this application and how to resolve the foregoing technical problems by using the technical solutions of this application. The following several specific embodiments may be implemented independently or combined with each other, and same or similar concepts or processes may not be repeatedly described in some embodiments.

FIG. 4 is a schematic flowchart of a communication method according to an embodiment of this application. The embodiment corresponding to FIG. 4 is a schematic flowchart of establishing a QUIC connection between a terminal device and a UPF network element. The method includes the following steps.

S401: The terminal device sends, to a session management function SMF network element, a message used to request to establish or update a PDU session and indication information used to indicate that the terminal device supports a QUIC capability.

During specific implementation, the message requesting to establish or update the PDU session may be the foregoing first message.

In a possible implementation, the terminal device may encapsulate the first message in a NAS transmission message, and send the NAS transmission message to an AMF network element. The AMF network element forwards the first message to the SMF network element.

In a possible implementation, the terminal device may send a NAS transmission message to an AMF network element through a RAN, where the NAS transmission message includes the message requesting to establish or update the PDU session, and the message requesting to establish or update the PDU session carries the indication information used to indicate that the terminal device supports the QUIC capability. The AMF network element further forwards the message requesting to establish or update the PDU session to the SMF network element.

In a possible implementation, the terminal device sends a NAS transmission message to an AMF network element, where the NAS transmission message includes the indication information indicating that the terminal device supports the QUIC capability and the message requesting to establish or update the PDU session. The AMF network element forwards the message requesting to establish or update the PDU session and the indication information of the QUIC capability to the SMF network element.

In a possible implementation, a NAS transmission message includes the message requesting to establish or update the PDU session and the indication information indicating that the terminal device supports the QUIC capability. An AMF network element selects, based on the indication information of the QUIC capability, the SMF network element that supports a QUIC function, and further forwards the message requesting to establish the PDU session and the indication information indicating that the terminal device supports the QUIC capability to the SMF network element.

The SMF network element may receive the first message from the terminal device, or receives, as in the claimed invention, the first message and the indication information indicating that the terminal device supports the QUIC capability.

S402: The SMF network element determines that a traffic flow in the PDU session is transmitted by using a QUIC method.

In a possible implementation, the SMF network element may determine that the traffic flow that uses a UDP in the PDU session is transmitted by using the QUIC method.

For example, S402 may include the following steps: S4021: The SMF network element sends a policy request (policy request) to a PCF network element, where the policy request may include the indication information used to indicate that the terminal device supports the QUIC capability. S4022: The PCF network element determines that the traffic flow in the PDU session is transmitted by using the QUIC method (which may also be referred to as a QUIC policy). For example, when the traffic flow in the PDU session is a UDF traffic flow, the PCF network element may determine that the traffic flow in the PDU session is transmitted by using the QUIC method. S4023: The PCF network element sends, to the SMF network element, an indication (which may also be referred to as a QUIC policy indication) indicating that the traffic flow in the PDU session is transmitted by using the QUIC method.

In this embodiment of this application, the SMF network element may determine, based on the policy indication of the PCF network element, that the traffic flow in the PDU session is transmitted by using the QUIC method.

In a possible implementation, the PCF network element may further send a traffic flow identifier and/or an application identifier to the SMF network element, to indicate that the traffic flow corresponding to the traffic flow identifier or the application identifier is transmitted by using the QUIC method. That is, offloading and aggregation are performed by using a QUIC protocol. It may be understood that if the PCF network element does not send the traffic flow identifier or the application identifier to the SMF network element, all traffic flows in the PDU session may be transmitted by using the QUIC method, or the traffic flow transmitted in the PDU session by using the QUIC method may be determined according to another policy (for example, a local configuration policy). This is not specifically limited in this embodiment of this application.

S403: The SMF network element sends QUIC method indication information to the UPF network element.

In this embodiment of this application, the SMF network element may send the QUIC method indication information to the UPF network element. The UPF network element may allocate a QUIC function parameter to the terminal device based on the QUIC method indication information, and establish a QUIC connection based on the QUIC function parameter.

In a possible implementation, the SMF network element may further send the traffic flow identifier to the UPF network element, and establish, based on the QUIC function parameter, the QUIC connection for the traffic flow corresponding to the traffic flow identifier.

In a possible implementation, if the SMF network element receives a first QUIC connection identifier, an indication parameter of a QUIC omitted connection identifier, a QUIC capability indication parameter, or first QUIC version information from the terminal device, the SMF network element may also send the information to the UPF network element, so that the UPF network element can configure the QUIC function parameter with reference to the information.

S404: The UPF network element sends the QUIC function parameter to the SMF network element.

In this embodiment of this application, the UPF network element may send an N4 reply message to the SMF network element, where the N4 reply message carries the QUIC function parameter.

In a possible implementation, the UPF network element may send the QUIC function parameter to the SMF network element by using a QUIC container parameter.

In a possible implementation, if the UPF network element cannot support a QUIC version supported by the terminal device, the terminal device may not be capable of establishing the QUIC connection to the UPF network element. The UPF network element may send, to the SMF network element, the indication information indicating that the version is not supported, and the SMF network element may not send the QUIC method indication information to the terminal device, to end establishment of the QUIC connection.

S405: The SMF network element sends a second message to the terminal device, where the second message is a message indicating that the PDU session is successfully established or updated.

As described in the foregoing descriptions of the second message, the second message may include at least one of a traffic flow identifier, an application identifier, a QUIC function parameter, or a QUIC method indication information.

In a possible implementation, the SMF network element may send the QUIC function parameter to the terminal device by using a QUIC container parameter. Alternatively, the QUIC function parameter may be sent to the terminal device in any other manner. The terminal device receives the QUIC function parameter from the SMF network element, and may establish the QUIC connection based on the QUIC function parameter, so that the terminal device may perform data transmission with the UPF network element based on the QUIC connection.

In another possible implementation, the SMF network element may send at least one of the traffic flow identifier, the application identifier, or the QUIC method indication information to the terminal device, and the terminal device may further send a QUIC message to the UPF network element, to obtain, from the UPF network element, a parameter required for establishing the QUIC connection, to establish the QUIC connection to the UPF network element.

S406: The terminal device performs data transmission with the UPF network element based on the established QUIC connection.

In this embodiment of this application, in an uplink, when the terminal device sends, to the UPF network element, a traffic flow data packet transmitted by using the QUIC connection, the terminal device may perform QUIC packet header encapsulation on the traffic flow data packet, and a QUIC packet header may carry one or more of the QUIC function parameters.

For example, the first QUIC connection identifier or a second QUIC connection identifier may be carried in the QUIC packet header. A destination IP address or a port number in the QUIC packet header may be set to an IP address or a port number of the QUIC function. In an example that is not according to the claims, security encryption may be performed on the traffic flow data packet based on a security parameter. If the QUIC connection for the indication parameter of the QUIC omitted connection identifier is used, the QUIC packet header does not carry the QUIC connection identifier.

In a downlink, when the UPF network element sends, to the terminal device, a traffic flow data packet transmitted by using the QUIC connection, the UPF network element may perform QUIC packet header encapsulation on the traffic flow data packet, and a QUIC packet header may carry one or more of the QUIC function parameters.

In a possible implementation, whether the encapsulated traffic flow data packet is placed on a 3GPP side or a non-3GPP side may be determined according to another policy. This is not specifically limited in this embodiment of this application.

In conclusion, in this embodiment of this application, a network side may control establishment of the QUIC connection between the terminal device and the UPF network element, so that offloading and aggregation at a flow granularity can be implemented for a UDP traffic flow based on the QUIC connection, to increase a service transmission bandwidth.

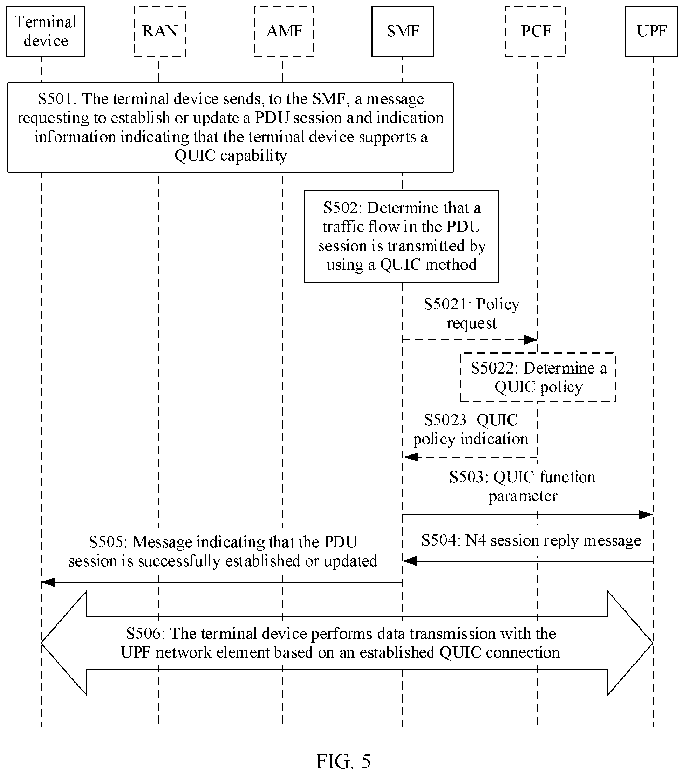

FIG. 5 is a schematic flowchart of a communication method according to an embodiment of this application. The embodiment corresponding to FIG. 5 is a schematic flowchart of establishing a QUIC connection between a terminal device and a UPF network element. The method includes the following steps.

S501: The terminal device sends, to a session management function SMF network element, a message used to request to establish or update a PDU session and indication information used to indicate that the terminal device supports a QUIC capability.

S502: The SMF network element determines that a traffic flow in the PDU session is transmitted by using a QUIC method.

In a possible implementation, S502 may include the following steps: S5021: The SMF network element sends a policy request (policy request) to a PCF network element, where the policy request may include the indication information used to indicate that the terminal device supports the QUIC capability. S5022: The PCF network element determines that the traffic flow in the PDU session is transmitted by using the QUIC method (which may also be referred to as a QUIC policy). S5023: The PCF network element sends, to the SMF network element, an indication (which may also be referred to as a QUIC policy indication) indicating that the traffic flow in the PDU session is transmitted by using the QUIC method.

S503: The SMF network element sends a QUIC function parameter to the UPF network element.

S504: The UPF network element sends an N4 session reply message to the SMF network element.

S505: The SMF network element sends a second message to the terminal device, where the second message is a message indicating that the PDU session is successfully established or updated.

S506: The terminal device performs data transmission with the UPF network element based on the established QUIC connection.

In this embodiment of this application, for S501, S502, S505, and S506, refer to S401, S402, S405, and S406 in the embodiment corresponding to FIG. 4. Details are not described herein again.

A difference from the embodiment in FIG. 4 is that, the QUIC function parameter in the embodiment corresponding to FIG. 4 is configured by the UPF network element, and the QUIC function parameter in this embodiment of this application is configured by the SMF network element.

S503: The SMF network element sends the QUIC function parameter to the UPF network element. In a possible implementation, if the SMF network element receives a first QUIC connection identifier sent by the terminal device, the SMF network element may send the first QUIC connection identifier to the UPF network element. If the SMF network element receives an indication parameter, of a QUIC omitted connection identifier, sent by the terminal device, the SMF network element may send the indication parameter of the QUIC omitted connection identifier to the UPF network element.

The UPF network element may establish the QUIC connection for the traffic flow based on the QUIC function parameter configured by the SMF network element.

For example, the UPF network element may store a second QUIC connection identifier, the first QUIC connection identifier, a security parameter, a transmission parameter, or the like that is sent by the SMF network element. If the UPF network element receives the indication parameter of the QUIC omitted connection identifier, the UPF does not include a connection identifier in a QUIC packet header when encapsulating a user downlink data packet by using the QUIC protocol header. Otherwise, the UPF network element may include at least one of a second connection identifier or a first connection identifier in the QUIC packet header. The UPF network element may encrypt, based on the received security parameter, data transmitted in the QUIC connection. The UPF network element may control the QUIC connection based on the transmission parameter.

In S504, the UPF network element may send the N4 session reply message to the SMF network element, to indicate that an N4 session is successfully established.

In conclusion, in this embodiment of this application, a network side may control establishment of the QUIC connection between the terminal device and the UPF network element, so that offloading and aggregation at a flow granularity can be implemented for a UDP traffic flow based on the QUIC connection, to increase a service transmission bandwidth.

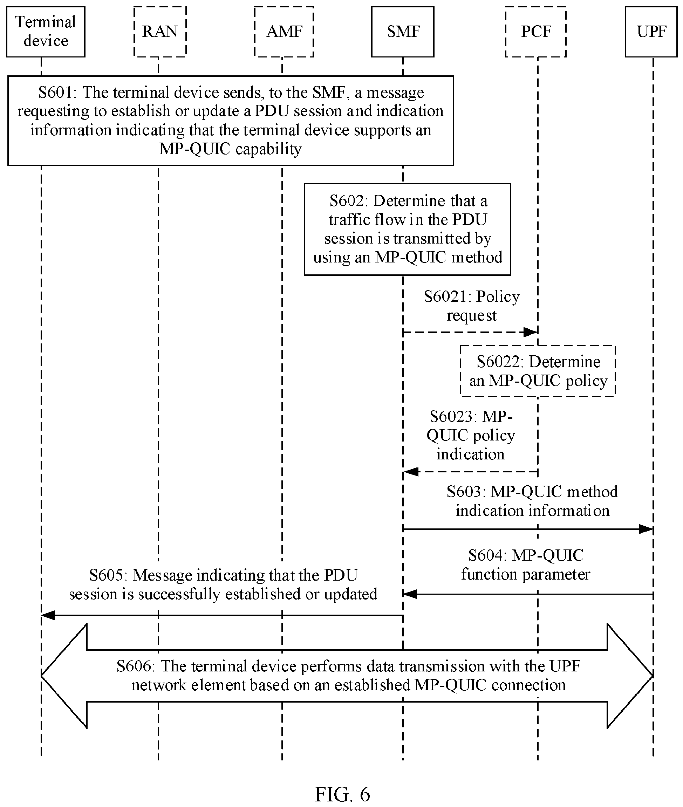

FIG. 6 is a schematic flowchart of a communication method according to an embodiment of this application. The embodiment corresponding to FIG. 6 is a schematic flowchart of establishing an MP-QUIC connection between a terminal device and a UPF network element. The method includes the following steps.

S601: The terminal device sends, to a session management function SMF network element, a message used to request to establish or update a PDU session and indication information used to indicate that the terminal device supports an MP-QUIC capability.

During specific implementation, the message requesting to establish or update the PDU session may be the foregoing first message.

In a possible implementation, the terminal device may encapsulate the first message in a NAS transmission message, and send the NAS transmission message to an AMF network element. The AMF network element forwards the first message to the SMF network element.

In a possible implementation, the terminal device may send a NAS transmission message to an AMF network element through a RAN, where the NAS transmission message includes the message requesting to establish or update the PDU session, and the message requesting to establish or update the PDU session carries indication information used to indicate an MP-QUIC capability supported by the terminal device. The AMF network element further forwards the message requesting to establish or update the PDU session to the SMF network element.

In a possible implementation, the terminal device sends a NAS transmission message to an AMF network element, where the NAS transmission message includes indication information of an MP-QUIC capability supported by the terminal device and the message requesting to establish or update the PDU session. The AMF network element forwards the message requesting to establish or update the PDU session and the indication information of the MP-QUIC capability to the SMF network element.

In a possible implementation, a NAS transmission message includes the message requesting to establish or update the PDU session and indication information of an MP-QUIC capability supported by the terminal device. An AMF network element selects, based on the indication information of the MP-QUIC capability, the SMF network element that supports an MP-QUIC function, and further forwards the message requesting to establish the PDU session and the indication information of the MP-QUIC capability supported by the terminal device to the SMF network element.

The SMF network element may receive the first message from the terminal device, or receive the first message and the indication information of the MP-QUIC capability supported by the terminal device.

S602: The SMF network element determines that a traffic flow in the PDU session is transmitted by using an MP-QUIC method.

In a possible implementation, the SMF network element may determine that the traffic flow that uses a UDP in the PDU session is transmitted by using the MP-QUIC method.

For example, S602 may include the following steps: S6021: The SMF network element sends a policy request (policy request) to a PCF network element, where the policy request may include the indication information used to indicate that the terminal device supports the MP-QUIC capability. S6022: The PCF network element determines that the traffic flow in the PDU session is transmitted by using the MP-QUIC method (which may also be referred to as an MP-QUIC policy). For example, when the traffic flow in the PDU session is a UDF traffic flow, the PCF network element may determine that the traffic flow in the PDU session is transmitted by using the MP-QUIC method. S6023: The PCF network element sends, to the SMF network element, an indication (which may also be referred to as an MP-QUIC policy indication) indicating that the traffic flow in the PDU session is transmitted by using the MP-QUIC method.

In this embodiment of this application, the SMF network element may determine, based on the policy indication of the PCF network element, that the traffic flow in the PDU session is transmitted by using the MP-QUIC method.

In a possible implementation, the PCF network element may further send a traffic flow identifier and/or an application identifier to the SMF network element, to indicate that the traffic flow corresponding to the traffic flow identifier or the application identifier is transmitted by using the MP-QUIC method. That is, offloading and aggregation are performed by using an MP-QUIC protocol. It may be understood that if the PCF network element does not send the traffic flow identifier or the application identifier to the SMF network element, all traffic flows in the PDU session may be transmitted by using the MP-QUIC method, or the traffic flow transmitted in the PDU session by using the MP-QUIC method may be determined according to another policy (for example, a local configuration policy). This is not specifically limited in this embodiment of this application.

S603: The SMF network element sends MP-QUIC method indication information to the UPF network element.

In this embodiment of this application, the SMF network element may send the MP-QUIC method indication information to the UPF network element. The UPF network element may allocate an MP-QUIC function parameter to the terminal device based on the MP-QUIC method indication information, and establish an MP-QUIC connection based on the MP-QUIC function parameter.

In a possible implementation, the SMF network element may further send the traffic flow identifier to the UPF network element, and establish, based on the MP-QUIC function parameter, the MP-QUIC connection for the traffic flow corresponding to the traffic flow identifier.

In a possible implementation, if the SMF network element receives a first MP-QUIC connection identifier, an indication parameter of an MP-QUIC omitted connection identifier, an MP-QUIC capability indication parameter, or first MP-QUIC version information from the terminal device, the SMF network element may also send the information to the UPF network element, so that the UPF network element can configure the MP-QUIC function parameter with reference to the information.

S604: The UPF network element sends the MP-QUIC function parameter to the SMF network element.

In this embodiment of this application, the UPF network element may send an N4 reply message to the SMF network element, where the N4 reply message carries the MP-QUIC function parameter. Alternatively, the UPF network element may send the MP-QUIC function parameter to the SMF network element by using an MP-QUIC container parameter.

In a possible implementation, if the UPF network element cannot support an MP-QUIC version supported by the terminal device, the terminal device cannot establish the MP-QUIC connection to the UPF network element. The UPF network element may send, to the SMF network element, the indication information indicating that the version is not supported, and the SMF network element may not send the MP-QUIC method indication information to the terminal device, to end establishment of the MP-QUIC connection.

S605: The SMF network element sends a second message to the terminal device, where the second message includes a message indicating that the PDU session is successfully established or updated.

In a possible implementation, as described in the foregoing descriptions of the second message, the second message may include at least one of a traffic flow identifier, an application identifier, an MP-QUIC function parameter, or an MP-QUIC method indication information.

In a possible implementation, the SMF network element may send the MP-QUIC function parameter to the terminal device by using an MP-QUIC container parameter. Alternatively, the MP-QUIC function parameter may be sent to the terminal device in any other manner. The terminal device receives the MP-QUIC function parameter from the SMF network element, and may establish the MP-QUIC connection based on the MP-QUIC function parameter, so that the terminal device may perform data transmission with the UPF network element based on the MP-QUIC connection.

In another possible implementation, the SMF network element may send at least one of the traffic flow identifier, the application identifier, or the MP-QUIC method indication information to the terminal device, and the terminal device may further send an MP-QUIC message to the UPF network element, to obtain, from the UPF network element, a parameter required for establishing the MP-QUIC connection, to establish the MP-QUIC connection to the UPF network element.

S606: The terminal device performs data transmission with the UPF network element based on the established MP-QUIC connection.

In this embodiment of this application, in an uplink, when the terminal device sends, to the UPF network element, a traffic flow data packet transmitted by using the MP-QUIC connection, the terminal device may perform MP-QUIC packet header encapsulation on the traffic flow data packet, and an MP-QUIC packet header may carry one or more of the MP-QUIC function parameters.

For example, the first MP-QUIC connection identifier or a second MP-QUIC connection identifier may be carried in the MP-QUIC packet header. A destination IP address or a port number in the MP-QUIC packet header may be set to an IP address or a port number of the MP-QUIC function. In an example that is not according to the claims, security encryption may be performed on the traffic flow data packet based on a security parameter. If the MP-QUIC connection for the indication parameter of the MP-QUIC omitted connection identifier is used, the MP-QUIC packet header does not carry the MP-QUIC connection identifier.

In a downlink, when the UPF network element sends, to the terminal device, a traffic flow data packet transmitted by using the MP-QUIC connection, the UPF network element may perform MP-QUIC packet header encapsulation on the traffic flow data packet, and an MP-QUIC packet header may carry one or more of the MP-QUIC function parameters.

In a possible implementation, whether the encapsulated traffic flow data packet is placed on a 3GPP side or a non-3GPP side may be determined according to another policy. This is not specifically limited in this embodiment of this application.

In a possible implementation, a difference from the QUIC connection is that, in the MP-QUIC connection, the UPF network element allocates a connection identifier to an MP-QUIC sub-connection. The MP-QUIC function parameter may include one or more of a sub-connection identifier, access technology knowledge information, or a tunnel identifier.

For example, the UPF network element allocates a connection identifier a to an MP-QUIC sub-connection accessed through 3GPP, or the UPF network element allocates a connection identifier b to an MP-QUIC sub-connection accessed through non-3GPP. When a traffic flow packet is transmitted through 3GPP, the terminal device includes a sub-connection identifier (for example, an identifier a) corresponding to the 3GPP access technology to the MP-QUIC packet header. If a data packet is transmitted through non-3GPP, the terminal device includes a sub-connection identifier (for example, an identifier b) corresponding to the non-3GPP access technology in the MP-QUIC header.

In this embodiment of this application, when the MP-QUIC packet header is used to encapsulate the data, a sub-connection link may be clearly identified. If a packet loss rate is subsequently collected, a specific link on which a severe packet loss occurs may be learned.

In conclusion, in this embodiment of this application, a network side may control establishment of the MP-QUIC connection between the terminal device and the UPF network element, so that offloading and aggregation at a flow granularity can be implemented for a UDP traffic flow based on the MP-QUIC connection, to increase a service transmission bandwidth.

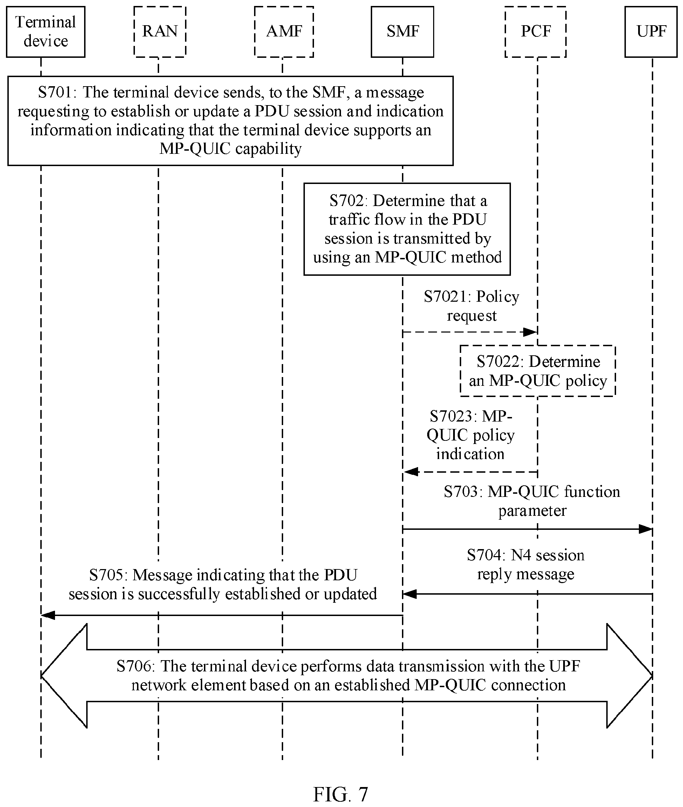

FIG. 7 is a schematic flowchart of a communication method according to an embodiment of this application. The embodiment corresponding to FIG. 7 is a schematic flowchart of establishing an MP-QUIC connection between a terminal device and a UPF network element. The method includes the following steps.

S701: The terminal device sends, to a session management function SMF network element, a message used to request to establish or update a PDU session and indication information used to indicate that the terminal device supports an MP-QUIC capability.

S702: The SMF network element determines that a traffic flow in the PDU session is transmitted by using an MP-QUIC method.

In a possible implementation, S702 may include the following steps: S7021: The SMF network element sends a policy request (policy request) to a PCF network element, where the policy request may include the indication information used to indicate that the terminal device supports the MP-QUIC capability. S7022: The PCF network element determines that the traffic flow in the PDU session is transmitted by using the MP-QUIC method (which may also be referred to as an MP-QUIC policy). S7023: The PCF network element sends, to the SMF network element, an indication (which may also be referred to as an MP-QUIC policy indication) indicating that the traffic flow in the PDU session is transmitted by using the MP-QUIC method.

S703: The SMF network element sends an MP-QUIC function parameter to the UPF network element.

S704: The UPF network element sends an N4 session reply message to the SMF network element.

S705: The SMF network element sends a second message to the terminal device, where the second message includes a message indicating that the PDU session is successfully established or updated.

S706: The terminal device performs data transmission with the UPF network element based on the established MP-QUIC connection.

In this embodiment of this application, for S701, S702, S705, and S706, refer to S601, S602, S605, and S606 in the embodiment corresponding to FIG. 6. Details are not described herein again.

A difference from the embodiment in FIG. 6 is that, the MP-QUIC function parameter in the embodiment corresponding to FIG. 6 is configured by the UPF network element, and the MP-QUIC function parameter in this embodiment of this application is configured by the SMF network element.

In S703, the SMF network element sends the MP-QUIC function parameter to the UPF network element. In a possible implementation, if the SMF network element receives a first MP-QUIC connection identifier sent by the terminal device, the SMF network element may send the first MP-QUIC connection identifier to the UPF network element. If the SMF network element receives an indication parameter, of an MP-QUIC omitted connection identifier, sent by the terminal device, the SMF network element may send the indication parameter of the MP-QUIC omitted connection identifier to the UPF network element.

The UPF network element may establish the MP-QUIC connection for the traffic flow based on the MP-QUIC function parameter configured by the SMF network element.

In S706, the UPF network element may send the N4 session reply message to the SMF network element, to indicate that an N4 session is successfully established.

In conclusion, in this embodiment of this application, a network side may control establishment of the MP-QUIC connection between the terminal device and the UPF network element, so that offloading and aggregation at a flow granularity can be implemented for a UDP traffic flow based on the MP-QUIC connection, to increase a service transmission bandwidth.

The foregoing describes the methods in embodiments of this application with reference to FIG. 4 to FIG. 7. The following describes a communication apparatus that is provided in embodiments of this application and that performs the foregoing methods. A person skilled in the art may understand that the method and the apparatus may be mutually combined and referenced. The communication apparatus provided in embodiments of this application may perform the steps performed by the SMF network element in the foregoing communication method. Another communication apparatus may perform the steps performed by the UPF network element in the communication method in the foregoing embodiment. Still another communication apparatus may perform the steps performed by the terminal device in the communication method in the foregoing embodiment.

An example in which each functional module is obtained through division based on a corresponding function is used below for description.

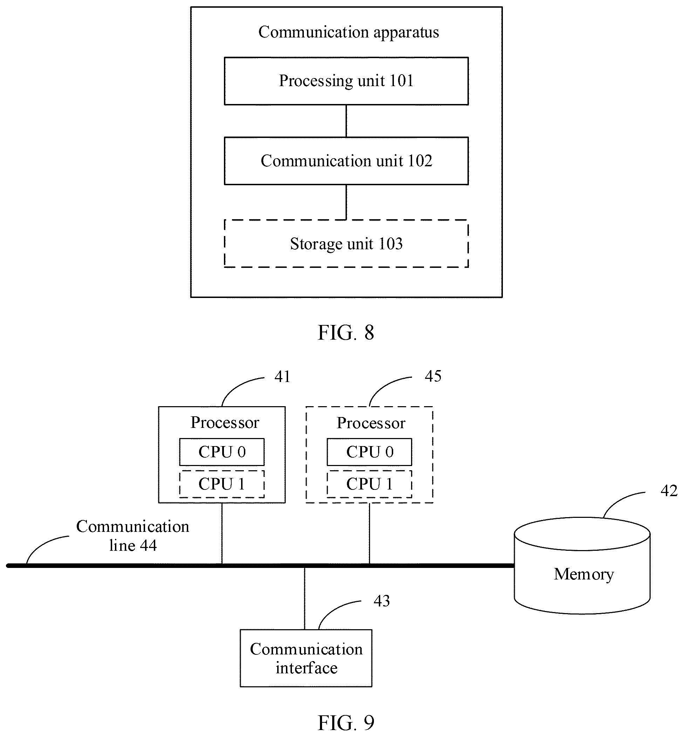

FIG. 8 is a schematic diagram of a structure of a communication apparatus according to an embodiment of this application. The communication apparatus may be an SMF network element, a UPF network element, or a terminal device in embodiments of this application, or may be a chip used in the SMF network element, the UPF network element, or the terminal device. The communication apparatus includes a processing unit 101 and a communication unit 102. The communication unit 102 is configured to support the communication apparatus in performing the step of sending or receiving information. The processing unit 101 is configured to support the communication apparatus in performing the step of processing information.

In an example, the communication apparatus is an SMF network element or a chip or a chip system used in the SMF network element. The communication unit 102 is configured to support the communication apparatus in performing S401, S403, S404, and S405 in the foregoing embodiment. The processing unit 101 is configured to support the communication apparatus in performing S402 in the foregoing embodiment. Alternatively, the communication unit 102 is configured to support the communication apparatus in performing S501, S503, S504, and S505 in the foregoing embodiment. The processing unit 101 is configured to support the communication apparatus in performing S502 in the foregoing embodiment. Alternatively, the communication unit 102 is configured to support the communication apparatus in performing S601, S603, S604, and S605 in the foregoing embodiment. The processing unit 101 is configured to support the communication apparatus in performing S602 in the foregoing embodiment. Alternatively, the communication unit 102 is configured to support the communication apparatus in performing S701, S703, S704, and S705 in the foregoing embodiment. The processing unit 101 is configured to support the communication apparatus in performing S702 in the foregoing embodiment.

In a possible embodiment, the communication unit 102 is further configured to support the communication apparatus in performing S4021 and S4023 in the foregoing embodiment. Alternatively, the communication unit 102 is further configured to support the communication apparatus in performing S5021 and S5023 in the foregoing embodiment. Alternatively, the communication unit 102 is further configured to support the communication apparatus in performing S6021 and S6023 in the foregoing embodiment. Alternatively, the communication unit 102 is further configured to support the communication apparatus in performing S7021 and S7023 in the foregoing embodiment.

In another example, the communication apparatus is a UPF network element or a chip or a chip system used in the UPF network element. The communication unit 102 is configured to support the communication apparatus in performing steps S403 and S404 in the foregoing embodiment. The processing unit 101 is configured to support the communication apparatus in performing S406 in the foregoing embodiment. Alternatively, the communication unit 102 is configured to support the communication apparatus in performing steps S503 and S504 in the foregoing embodiment. The processing unit 101 is configured to support the communication apparatus in performing S506 in the foregoing embodiment. Alternatively, the communication unit 102 is configured to support the communication apparatus in performing steps S603 and S604 in the foregoing embodiment. The processing unit 101 is configured to support the communication apparatus in performing S606 in the foregoing embodiment. Alternatively, the communication unit 102 is configured to support the communication apparatus in performing steps S703 and S704 in the foregoing embodiment. The processing unit 101 is configured to support the communication apparatus in performing S706 in the foregoing embodiment.

In still another example, the communication apparatus is a terminal device or a chip or a chip system used in the terminal device. The communication unit 102 is configured to support the communication apparatus in performing S401 and S405 in the foregoing embodiment. The processing unit 101 is configured to support the communication apparatus in performing S406 in the foregoing embodiment. Alternatively, the communication unit 102 is configured to support the communication apparatus in performing S501 and S505 in the foregoing embodiment. The processing unit 101 is configured to support the communication apparatus in performing S506 in the foregoing embodiment. Alternatively, the communication unit 102 is configured to support the communication apparatus in performing S601 and S605 in the foregoing embodiment. The processing unit 101 is configured to support the communication apparatus in performing S606 in the foregoing embodiment. Alternatively, the communication unit 102 is configured to support the communication apparatus in performing S701 and S705 in the foregoing embodiment. The processing unit 101 is configured to support the communication apparatus in performing S706 in the foregoing embodiment.

In a possible embodiment, the communication apparatus may further include a storage unit 103. The processing unit 101, the communication unit 102, and the storage unit 103 are connected through a communication bus.

The storage unit 103 may include one or more memories. The memory may be a component configured to store a program or data in one or more devices or circuits.

The storage unit 103 may exist independently, and is connected to the processing unit 101 of the communication apparatus through the communication bus. The storage unit 103 may alternatively be integrated with the processing unit.

The communication apparatus may be used in a communication device, a circuit, a hardware component, or a chip.

For example, the communication apparatus may be the chip or the chip system used in the SMF network element, the UPF network element, or the terminal device in embodiments of this application. In this case, the communication unit 102 may be an input or output interface, a pin, a circuit, or the like. For example, the storage unit 103 may store computer-executable instructions of the method on an SMF network element side, a UPF network element side, or a terminal device side, so that the processing unit 101 performs the method on the SMF network element side, the UPF network element side, or the terminal device side in the foregoing embodiment. The storage unit 103 may be a register, a cache, a RAM, or the like. The storage unit 103 may be integrated into the processing unit 101. The storage unit 103 may be a ROM or another type of static storage device that can store static information and instructions, and the storage unit 103 may be independent of the processing unit 101.

An embodiment of this application provides a communication apparatus. The communication apparatus includes one or more modules, configured to implement the method in S401 to S406; S501 to S506; S601 to S606; or S701 to S706. The one or more modules may correspond to steps in the method in S401 to S406; S501 to S506; S601 to S606; or S701 to S706. Specifically, for each step in the method performed by the SMF network element in embodiments of this application, the SMF network element includes a unit or module for performing each step in the method. For each step in the method performed by the UPF network element, the UPF network element includes a unit or module for performing each step in the method. For each step in the method performed by the terminal device, the terminal device includes a unit or a module for performing each step in the method. For example, a module that controls or processes an action of the communication apparatus may be referred to as a processing module. A module that performs the step of processing a message or data on the communication apparatus side may be referred to as a communication module.

FIG. 9 is a schematic diagram of a hardware structure of a communication device according to an embodiment of this application. For hardware structures of the SMF network element and the UPF network element in embodiments of this application, refer to the schematic diagram of the hardware structure of the communication device shown in FIG. 9. The communication device includes a processor 41, a communication line 44, and at least one communication interface (a communication interface 43 is used as an example in FIG. 9).

The processor 41 may be a general-purpose central processing unit (central processing unit, CPU), a microprocessor, an application-specific integrated circuit (application-specific integrated circuit, ASIC), or one or more integrated circuits configured to control program execution of the solutions of this application.

The communication line 44 may include a path for transferring information between the foregoing components.

The communication interface 43 is any apparatus such as a transceiver, and is configured to communicate with another device or a communication network such as an ethernet, a radio access network (radio access network, RAN), or a wireless local area network (wireless local area network, WLAN).

Possibly, the communication device may further include a memory 42.

The memory 42 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that can be accessed by a computer. However, the memory 42 is not limited thereto. The memory may exist independently, and is connected to the processor through the communication line 44. Alternatively, the memory may be integrated with the processor.

The memory 42 is configured to store computer-executable instructions for performing the solutions of this application, and the processor 41 controls execution of the computer-executable instructions. The processor 41 is configured to execute the computer-executable instructions stored in the memory 42, to implement a policy control method provided in the following embodiments of this application.

Possibly, the computer-execution instructions in embodiments of this application may also be referred to as application program code. This is not specifically limited in embodiments of this application.

During specific implementation, in an embodiment, the processor 41 may include one or more CPUs, such as a CPU 0 and a CPU 1 in FIG. 9.

During specific implementation, in an embodiment, the communication device may include a plurality of processors, such as the processor 41 and a processor 45 in FIG. 9. Each of these processors may be a single-core (single-CPU) processor, or may be a multi-core (multi-CPU) processor. The processor herein may be one or more devices, circuits, and/or processing cores configured to process data (for example, computer program instructions).

For example, the communication apparatus is an SMF network element or a chip used in the SMF network element. The communication interface is configured to support the communication apparatus in performing S401, S403, S404, and S405; S501, S503, S504, and S505; S601, S603, S604, and S605; or S701, S703, S704, and S705 in the foregoing embodiment. The processor 41 or the processor 45 is configured to support the communication apparatus in performing S402, S502, S602, or S702 in the foregoing embodiment.

In another example, the communication apparatus may be a UPF network element or a chip or a chip system used in the UPF network element. The communication interface is configured to support the communication apparatus in performing S403 and S404; S503 and S504; S603 and S604; or S703 and S704 in the foregoing embodiment. The processor 41 or the processor 45 is configured to support the communication apparatus in performing step S406, S506, S606, or S706 in the foregoing embodiment.

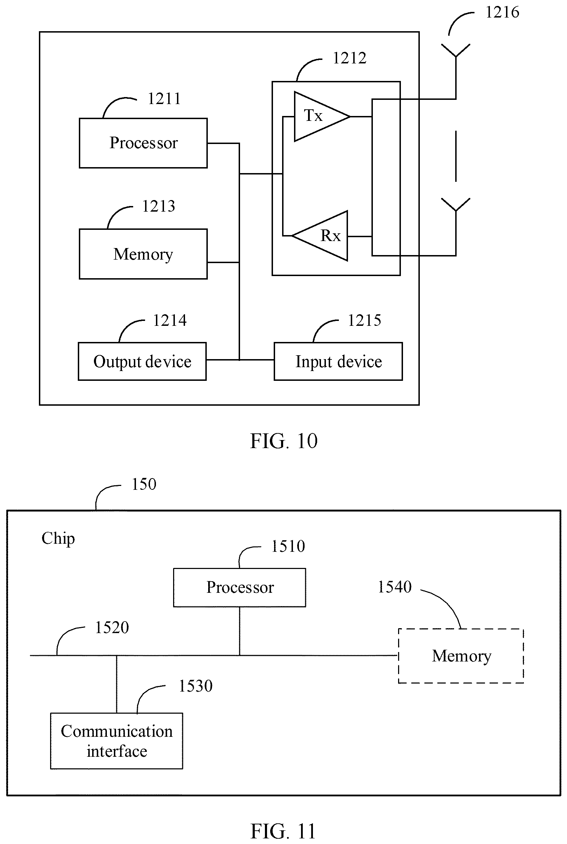

FIG. 10 is a schematic diagram of a structure of a terminal device (briefly referred to as a terminal below) according to an embodiment of this application.

The terminal includes at least one processor 1211 and at least one transceiver 1212. In a possible example, the terminal may further include at least one memory 1213, an output device 1214, an input device 1215, and one or more antennas 1216. The processor 1211, the memory 1213, and the transceiver 1212 are connected to each other. The antenna 1216 is connected to the transceiver 1212, and the output device 1214 and the input device 1215 are connected to the processor 1211.

A memory in this embodiment of this application, for example, the memory 1213, may include at least one of the following types: a read-only memory (read-only memory, ROM) or another type of static storage device that can store static information and instructions, a random access memory (random access memory, RAM) or another type of dynamic storage device that can store information and instructions, or an electrically erasable programmable read-only memory (Electrically erasable programmable-only memory, EEPROM). In some scenarios, the memory may alternatively be a compact disc read-only memory (compact disc read-only memory, CD-ROM) or another compact disc storage medium, an optical disc storage medium (including a compact disc, a laser disc, an optical disc, a digital versatile disc, a Blu-ray disc, or the like), a magnetic disk storage medium or another magnetic storage device, or any other medium that can be configured to carry or store expected program code in a form of instructions or a data structure and that can be accessed by a computer. However, the memory is not limited thereto.

The memory 1213 may exist independently, and is connected to the processor 1211. In another example, the memory 1213 may be integrated with the processor 1211, for example, be integrated into a chip. The memory 1213 can store program code for executing the technical solution in this embodiment of this application, and the processor 1211 controls execution of the program code. Various types of executed computer program code may also be considered as drivers of the processor 1211. For example, the processor 1211 is configured to execute the computer program code stored in the memory 1213, to implement the technical solution in this embodiment of this application.

The transceiver 1212 may be configured to support receiving or sending of a radio frequency signal between terminals or between a terminal and an access device, and the transceiver 1212 may be connected to the antenna 1216. The transceiver 1212 includes a transmitter Tx and a receiver Rx. Specifically, the one or more antennas 1216 may receive a radio frequency signal. The receiver Rx of the transceiver 1212 is configured to: receive the radio frequency signal from the antenna, convert the radio frequency signal into a digital baseband signal or a digital intermediate frequency signal, and provide the digital baseband signal or the digital intermediate frequency signal for the processor 1211, so that the processor 1211 further processes the digital baseband signal or the digital intermediate frequency signal, for example, performs demodulation processing and decoding processing. In addition, the transmitter Tx of the transceiver 1212 is further configured to: receive a modulated digital baseband signal or a modulated digital intermediate frequency signal from the processor 1211, convert the modulated digital baseband signal or the digital intermediate frequency signal into a radio frequency signal, and send the radio frequency signal through the one or more antennas 1216. Specifically, the receiver Rx may selectively perform one-level or multi-level down-conversion mixing and analog-to-digital conversion on the radio frequency signal, to obtain the digital baseband signal or the digital intermediate frequency signal. A sequence of the down-conversion mixing and the analog-to-digital conversion may be adjusted. The transmitter Tx may selectively perform one-level or multi-level up-conversion mixing and digital-to-analog conversion on the modulated digital baseband signal or the modulated digital intermediate frequency signal, to obtain the radio frequency signal. A sequence of the up-conversion mixing and the digital-to-analog conversion may be adjusted. The digital baseband signal and the digital intermediate frequency signal may be collectively referred to as digital signals.

The processor 1211 may be a baseband processor, or may be a CPU. The baseband processor and the CPU may be integrated or separated.

The processor 1211 may be configured to implement various functions for the terminal, for example, configured to process a communication protocol and communication data, or configured to: control the entire terminal device, execute a software program, and process data of the software program, or configured to assist in completing a computing processing task, for example, graphics and image processing or audio processing. Alternatively, the processor 1211 is configured to implement one or more of the foregoing functions.

The output device 1214 communicates with the processor 1211, and may display information in a plurality of manners. For example, the output device 1214 may be a liquid crystal display (Liquid Crystal Display, LCD), a light emitting diode (Light Emitting Diode, LED) display device, a cathode ray tube (Cathode Ray Tube, CRT) display device, a projector (projector), or the like. The input device 1215 communicates with the processor 1211, and may receive an input of a user in a plurality of manners. For example, the input device 1215 may be a mouse, a keyboard, a touchscreen device, or a sensor device.

Specifically, the at least one processor 1211 is configured to perform S406, S506, S606, or S706. The at least one transceiver 1212 is configured to perform S401 and S405; S501 and S505; S601 and S605; or S701 and S705.

FIG. 11 is a schematic diagram of a structure of a chip 150 according to an embodiment of the present invention. The chip 150 includes one or more (including two) processors 1510 and a communication interface 1530.

In a possible embodiment, the chip 150 shown in FIG. 11 further includes a memory 1540. The memory 1540 may include a read-only memory and a random access memory, and provide operation instructions and data to the processor 1510. A part of the memory 1540 may further include a non-volatile random access memory (non-volatile random access memory, NVRAM).

In some implementations, the memory 1540 stores the following elements: an executable module or a data structure, or a subset thereof, or an extended set thereof.

In this embodiment of the present invention, a corresponding operation is performed by invoking the operation instruction stored in the memory 1540 (where the operation instruction may be stored in an operating system).

In a possible implementation, a structure of a chip used by the SMF network element, a structure of a chip used by the UPF network element, or a structure of a chip used by the terminal device is similar, and different apparatuses may use different chips to implement respective functions.

The processor 1510 controls an operation of the SMF network element, the UPF network element, or the terminal device, and the processor 1510 may also be referred to as a central processing unit (central processing unit, CPU). The memory 1540 may include a read-only memory and a random access memory, and provide instructions and data for the processor 1510. A part of the memory 1540 may further include a non-volatile random access memory (non-volatile random access memory, NVRAM). For example, in an application, the memory 1540, the communication interface 1530, and the memory 1540 are coupled together by using a bus system 1520. The bus system 1520 may further include a power bus, a control bus, a status signal bus, and the like in addition to a data bus. However, for clarity of description, various buses are marked as the bus system 1520 in FIG. 11.

The foregoing communication unit may be an interface circuit or a communication interface of the apparatus, and is configured to receive a signal from another apparatus. For example, when the apparatus is implemented as a chip, the communication unit is an interface circuit or a communication interface that is of the chip and that is configured to receive a signal from another chip or apparatus or send a signal.

The method disclosed in the foregoing embodiment of the present invention may be applied to the processor 1510, or implemented by the processor 1510. The processor 1510 may be an integrated circuit chip, and has a signal processing capability. In an implementation process, the steps in the foregoing method may be implemented through a hardware integrated logical circuit in the processor 1510, or by using instructions in a form of software. The processor 1510 may be a general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, or a discrete hardware component. It may implement or perform the methods, the steps, and logical block diagrams that are disclosed in embodiments of the present invention. The general-purpose processor may be a microprocessor, or the processor may be any conventional processor or the like. Steps of the methods disclosed with reference to embodiments of the present invention may be directly executed and accomplished by means of a hardware decoding processor, or may be executed and accomplished by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory 1540, and the processor 1510 reads information in the memory 1540 and completes the steps in the foregoing methods in combination with hardware of the processor 1510.

In a possible implementation, the communication interface 1530 is configured to perform receiving and sending steps of the SMF network element, the UPF network element, or the terminal device in the embodiments shown in FIG. 4 to FIG. 7. The processor 1510 is configured to perform processing steps of the SMF network element, the UPF network element, or the terminal device in the embodiments shown in FIG. 4 to FIG. 7.

In the foregoing embodiment, the instructions stored in the memory that are to be executed by the processor may be implemented in a form of a computer program product. The computer program product may be written into the memory in advance, or may be downloaded and installed in the memory in a software form.

The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

An embodiment of this application further provides a computer-readable storage medium. The methods described in the foregoing embodiments may be all or partially implemented by using software, hardware, firmware, or any combination thereof. If the methods are implemented in the software, functions used as one or more instructions or code may be stored in the computer-readable medium or transmitted on the computer-readable medium. The computer-readable medium may include a computer storage medium and a communication medium, and may further include any medium that can transfer a computer program from one place to another. The storage medium may be any target medium that can be accessed by a computer.

In a possible design, the computer-readable medium may include a RAM, a ROM, an EEPROM, a CD-ROM, or another optical disc storage, a magnetic disk storage or another magnetic storage device, or the computer-readable medium is used to carry required program code that is stored in a form of instructions or a data structure, and the computer-readable medium may be accessed by the computer. In addition, any connection is appropriately referred to as a computer-readable medium. For example, if a coaxial cable, an optical fiber cable, a twisted pair, a digital subscriber line (DSL), or wireless technologies (such as infrared, radio, and microwave) are used to transmit software from a website, a server, or another remote source, the coaxial cable, the optical fiber cable, the twisted pair, the DSL, or the wireless technologies such as infrared, radio, and microwave are included in a definition of the medium. Magnetic disks and optical discs used in this specification include a compact disk (CD), a laser disk, an optical disc, a digital versatile disc (DVD), a floppy disk, and a Blu-ray disc. The magnetic disks usually magnetically reproduce data, and the optical discs optically reproduce data by using laser light. The foregoing combinations should also be included within the scope of the computer-readable medium.

An embodiment of this application further provides a computer program product. The methods described in the foregoing embodiments may be all or partially implemented by using software, hardware, firmware, or any combination thereof. When the methods are implemented in the software, the methods may be all or partially implemented in a form of the computer program product. The computer program product includes one or more computer instructions. When the foregoing computer program instructions are loaded and executed on a computer, the procedures or functions described in the foregoing method embodiments are all or partially generated. The computer may be a general-purpose computer, a dedicated computer, a computer network, a base station, a terminal, or another programmable apparatus.

It should be noted that the network elements in embodiments of this application may also use other definitions or names in specific application. For example, the SMF network element may be referred to as a first core network element, the UPF network element may be referred to as a second core network element, the PCF network element may be referred to as a third core network element, the AMF network element may be referred to as a fourth core network element. Alternatively, the foregoing network elements may also be collectively referred to as core network elements. Alternatively, other names may be defined for the foregoing network elements based on actual functions. This is not specifically limited in embodiments of this application.

## Claims

1. A communication method, comprising:
receiving (S401, S501, S601, S701), by a session management function, SMF, network element, a first message from a terminal device, wherein the first message is used to request to establish or update a protocol data unit, PDU, session, the first message comprises first indication information, and the first indication information is indication information used to indicate that the terminal device supports a quick User Data Protocol, UDP, internet connection, QUIC, capability, or indication information used to indicate that the terminal device supports a multi-path quick UDP internet connection, MP-QUIC, capability;
determining (S402, S502, S602, S702), by the SMF network element, whether a traffic flow in the PDU session is to be transmitted by using a QUIC method or an MP-QUIC method; and
sending (S405, S505, S605, S705), by the SMF network element, a second message to the terminal device, wherein the second message is used to indicate that the PDU session is successfully established or updated, the second message comprises second indication information, and the second indication information is used to indicate that the traffic flow in the PDU session is to be transmitted by using the QUIC method, or is used to indicate that the traffic flow in the PDU session is to be transmitted by using the MP-QUIC method;
wherein the second indication information comprises a QUIC function parameter or an MP-QUIC function parameter, and the method further comprises:
obtaining, by the SMF network element, the QUIC function parameter or the MP-QUIC function parameter; **characterized in that** the QUIC function parameter or the MP-QUIC function parameter comprises a security parameter, and the security parameter includes a non-encryption indication.

2. The method according to claim 1, wherein the obtaining, by the SMF network element, the QUIC function parameter or the MP-QUIC function parameter comprises:
sending (S403, S603), by the SMF network element to a user plane function, UPF, network element, the indication information used to indicate that the traffic flow in the PDU session is to be transmitted by using the QUIC method, or the indication information used to indicate that the traffic flow in the PDU session is to be transmitted by using the MP-QUIC method; and
receiving (S404, S604), by the SMF network element, the QUIC function parameter or the MP-QUIC function parameter from the UPF network element.

3. The method according to claim 1, wherein the obtaining, by the SMF network element, the QUIC function parameter or the MP-QUIC function parameter comprises:
allocating, by the SMF network element, the QUIC function parameter or the MP-QUIC function parameter; and
the method further comprises: sending (S503, S703), by the SMF network element, the QUIC function parameter or the MP-QUIC function parameter to a UPF network element.

4. The method according to any one of claims 1 to 3, wherein the indication information used to indicate that the terminal device supports the QUIC capability comprises one or more of the following: an indication parameter of a QUIC omitted connection identifier, a first QUIC connection identifier, a QUIC capability indication parameter, a QUIC request indication parameter, or first QUIC version information, wherein the indication parameter of the QUIC omitted connection identifier indicates that the QUIC connection does not use a connection identifier, and the first QUIC connection identifier is a connection identifier allocated by the terminal device to a QUIC connection; or
the indication information used to indicate that the terminal device supports the MP-QUIC capability comprises one or more of the following: an indication parameter of an MP-QUIC omitted connection identifier, a first MP-QUIC connection identifier, an MP-QUIC capability indication parameter, an MP-QUIC request indication parameter, or first MP-QUIC version information, wherein the indication parameter of the MP-QUIC omitted connection identifier indicates that the MP-QUIC connection does not use a connection identifier, and the first MP-QUIC connection identifier is a connection identifier allocated by the terminal device to an MP-QUIC connection.

5. The method according to any one of claims 1 to 4, wherein
the QUIC function parameter further comprises one or more of the following: a QUIC function IP address, a QUIC function port number, a second QUIC connection identifier, an indication parameter of a QUIC omitted connection identifier, second QUIC version information, or a transmission parameter, wherein the indication parameter of the QUIC omitted connection identifier indicates that the QUIC connection does not use a connection identifier; or
the MP-QUIC function parameter further comprises one or more of the following: an MP-QUIC function IP address, an MP-QUIC function port number, a second MP-QUIC connection identifier, an indication parameter of an MP-QUIC omitted connection identifier, second MP-QUIC version information, or a transmission parameter, wherein the indication parameter of the MP-QUIC omitted connection identifier indicates that the MP-QUIC connection does not use a connection identifier.

6. The method according to claim 5, wherein the MP-QUIC function parameter further comprises one or more of the following: a sub-connection identifier, an access technology indication parameter, or information about a tunnel identifier, wherein the sub-connection identifier is a connection identifier of an MP-QUIC sub-connection corresponding to the access technology indication parameter or corresponding to the information about the tunnel identifier.

7. The method according to any one of claims 1 to 6, wherein the determining (S402, S502, S602, S702), by the SMF network element, whether a traffic flow in the PDU session is to be transmitted by using a QUIC method or an MP-QUIC method comprises:
receiving (S4023, S5023, S6023, S7023), by the SMF network element, QUIC method indication information or MP-QUIC method indication information from a policy control function PCF network element, wherein the QUIC method indication information is used to indicate that the traffic flow in the PDU session is to be transmitted by using the QUIC method, or the MP-QUIC method indication information is used to indicate that the traffic flow in the PDU session is to be transmitted by using the MP-QUIC method.

8. A communication method, comprising:
sending (S401, S501, S601, S701), by a terminal device, a first message to a session management function, SMF, network element, wherein the first message is used to request a protocol data unit to establish or update a protocol data unit, PDU, session, the first message comprises first indication information, and the first indication information is indication information used to indicate that the terminal device supports a quick User Data Protocol, UDP, internet connection, QUIC, capability, or indication information used to indicate that the terminal device supports a multi-path quick UDP internet connection, MP-QUIC, capability; and
receiving (S405, S505, S605, S705), by the terminal device, a second message from the SMF network element, wherein the second message is used to indicate that the PDU session is successfully established or updated, the second message comprises second indication information, and the second indication information is used to indicate that a traffic flow in the PDU session is to be transmitted by using a QUIC method, or is used to indicate that a traffic flow in the PDU session is to be transmitted by using an MP-QUIC method;
wherein the second indication information comprises a QUIC function parameter or an MP-QUIC function parameter; and
**characterized in that**
the QUIC function parameter or the MP-QUIC function parameter comprises a security parameter, and the security parameter includes a non-encryption indication.

9. The method according to claim 8, wherein the indication information used to indicate that the terminal device supports the QUIC capability comprises one or more of the following: an indication parameter of a QUIC omitted connection identifier, a first QUIC connection identifier, a QUIC capability indication parameter, a QUIC request indication parameter, or first QUIC version information, wherein the indication parameter of the QUIC omitted connection identifier indicates that the QUIC connection does not use a connection identifier, and the first QUIC connection identifier is a connection identifier allocated by the terminal device to a QUIC connection; or
the indication information used to indicate that the terminal device supports the MP-QUIC capability comprises one or more of the following: an indication parameter of an MP-QUIC omitted connection identifier, a first MP-QUIC connection identifier, an MP-QUIC capability indication parameter, an MP-QUIC request indication parameter, or first MP-QUIC version information, wherein the indication parameter of the MP-QUIC omitted connection identifier indicates that the MP-QUIC connection does not use a connection identifier, and the first MP-QUIC connection identifier is a connection identifier allocated by the terminal device to an MP-QUIC connection.

10. The method according to any one of claims 8 and 9, wherein
the QUIC function parameter further comprises one or more of the following: a QUIC function IP address, a QUIC function port number, a second QUIC connection identifier, an indication parameter of a QUIC omitted connection identifier, second QUIC version information, or a transmission parameter, wherein the indication parameter of the QUIC omitted connection identifier indicates that the QUIC connection does not use a connection identifier; or
the MP-QUIC function parameter further comprises one or more of the following: an MP-QUIC function IP address, an MP-QUIC function port number, a second MP-QUIC connection identifier, an indication parameter of an MP-QUIC omitted connection identifier, second MP-QUIC version information, or a transmission parameter, wherein the indication parameter of the MP-QUIC omitted connection identifier indicates that the MP-QUIC connection does not use a connection identifier.

11. The method according to any one of claims 8 to 10, further comprising:
establishing, by the terminal device, the QUIC connection or the MP-QUIC connection to a user plane function UPF network element based on the second message; and
performing (S406, S506, S606, S706), by the terminal device, data transmission by using the QUIC connection or the MP-QUIC connection.

12. A communication apparatus, comprising a processor and a communication interface, wherein
the communication interface is configured to perform an operation of sending or receiving a message in an SMF network element in the communication method according to any one of claims 1 to 7, or perform an operation of sending or receiving a message in a terminal device in the communication method according to any one of claims 8 to 11, and the processor runs instructions to perform a processing or control operation in the SMF network element in the communication method according to any one of claims 1 to 7, or perform a processing or control operation in the terminal device in the communication method according to any one of claims 8 to 11.

13. A computer-readable storage medium, wherein the computer-readable storage medium stores instructions; and when the instructions are run, the communication method according to any one of claims 1 to 7 or the communication method according to any one of claims 8 to 11 is implemented.

14. A communication system, comprising a session management function network element and an access and mobility management function network element configured to communicate with the session management function, wherein the session management function network element is configured to perform the communication method according to any one of claims 1 to 7.

## Patentansprüche

1. Kommunikationsverfahren, das umfasst:
Empfangen (S401, S501, S601, S701), durch ein Sitzungsverwaltungsfunktions(SMF)-Netzelement, einer ersten Nachricht von einem Endgerät, wobei die erste Nachricht verwendet wird, um anzufordern, eine Protokolldateneinheits(PDU)-Sitzung herzustellen oder zu aktualisieren, die erste Nachricht erste Anzeigeinformationen umfasst und die ersten Anzeigeinformationen Anzeigeinformationen, die verwendet werden, um anzuzeigen, dass das Endgerät eine schnelle Benutzerdatenprotokoll(UDP)-Internetverbindungs(QUIC)-Fähigkeit unterstützt, oder Anzeigeinformationen, die verwendet werden, um anzuzeigen, dass das Endgerät eine mehrwegige schnelle UDP-Intemetverbindung (MP-QUIC) unterstützt, sind;
Bestimmen (S402, S502, S602, S702), durch das SMF-Netzelement, ob ein Verkehrsfluss in der PDU-Sitzung durch Verwenden eines QUIC-Verfahrens oder eines MP-QUIC-Verfahrens übertragen werden soll; und
Senden (S405, S505, S605, S705), durch das SMF-Netzelement, einer zweiten Nachricht an das Endgerät, wobei die zweite Nachricht verwendet wird, um anzuzeigen, dass die PDU-Sitzung erfolgreich hergestellt oder aktualisiert wird, die zweite Nachricht zweite Anzeigeinformationen umfasst und die zweiten Anzeigeinformationen verwendet werden, um anzuzeigen, dass der Verkehrsfluss in der PDU-Sitzung durch Verwenden des QUIC-Verfahrens übertragen werden soll, oder verwendet werden, um anzuzeigen, dass der Verkehrsfluss in der PDU-Sitzung durch Verwenden des MP-QUIC-Verfahrens übertragen werden soll;
wobei die zweiten Anzeigeinformationen einen QUIC-Funktionsparameter oder einen MP-QUIC-Funktionsparameter umfassen und das Verfahren ferner umfasst: Erhalten, durch das SMF-Netzelement, des QUIC-Funktionsparameters oder des MP-QUIC-Funktionsparameters; **dadurch gekennzeichnet, dass**
der QUIC-Funktionsparameter oder der MP-QUIC-Funktionsparameter einen Sicherheitsparameter umfasst und der Sicherheitsparameter eine Nichtverschlüsselungsanzeige einschließt.

2. Verfahren nach Anspruch 1, wobei das Erhalten, durch das SMF-Netzelement, des QUIC-Funktionsparameters oder des MP-QUIC-Funktionsparameters umfasst:
Senden (S403, S603), durch das SMF-Netzelement an ein Benutzerebenenfunktions(UPF)-Netzelement, der Anzeigeinformationen, die verwendet werden, um anzuzeigen, dass der Verkehrsfluss in der PDU-Sitzung durch Verwenden des QUIC-Verfahrens übertragen werden soll, oder der Anzeigeinformationen, die verwendet werden, um anzuzeigen, dass der Verkehrsfluss in der PDU-Sitzung durch Verwenden des MP-QUIC-Verfahrens übertragen werden soll; und
Empfangen (S404, S604), durch das SMF-Netzelement, des QUIC-Funktionsparameters oder des MP-QUIC-Funktionsparameters von dem UPF-Netzelement.

3. Verfahren nach Anspruch 1, wobei das Erhalten, durch das SMF-Netzelement, des QUIC-Funktionsparameters oder des MP-QUIC-Funktionsparameters umfasst:
Zuweisen, durch das SMF-Netzelement, des QUIC-Funktionsparameters oder des MP-QUIC-Funktionsparameters; und
das Verfahren ferner umfasst: Senden (S503, S703), durch das SMF-Netzelement, des QUIC-Funktionsparameters oder des MP-QUIC-Funktionsparameters an ein UPF-Netzelement.

4. Verfahren nach einem der Ansprüche 1 bis 3, wobei die Anzeigeinformationen, die verwendet werden, um anzuzeigen, dass das Endgerät die QUIC-Funktion unterstützt, eines oder mehrere der Folgenden umfassen: einen Anzeigeparameter einer weggelassenen QUIC-Verbindungskennung, eine erste QUIC-Verbindungskennung, einen QUIC-Fähigkeitsanzeigeparameter, einen QUIC-Anforderungsanzeigeparameter oder Informationen über eine erste QUIC-Version, wobei der Anzeigeparameter der weggelassenen QUIC-Verbindungskennung anzeigt, dass die QUIC-Verbindung keine Verbindungskennung verwendet, und die erste QUIC-Verbindungskennung eine Verbindungskennung, die durch das Endgerät einer QUIC-Verbindung zugewiesen wird, ist; oder
die Anzeigeinformationen, die verwendet werden, um anzuzeigen, dass das Endgerät die MP-QUIC-Fähigkeit unterstützt, eines oder mehrere der Folgenden umfassen:
einen Anzeigeparameter einer weggelassenen MP-QUIC-Verbindungskennung, eine erste MP-QUIC-Verbindungskennung, einen MP-QUIC-Fähigkeitsanzeigeparameter, einen MP-QUIC-Anforderungsanzeigeparameter oder Informationen über die erste MP-QUIC-Version, wobei der Anzeigeparameter der weggelassenen MP-QUIC-Verbindungskennung anzeigt, dass die MP-QUIC-Verbindung keine Verbindungskennung verwendet, und die erste MP-QUIC-Verbindungskennung eine Verbindungskennung, die einer MP-QUIC-Verbindung durch das Endgerät zugewiesen wird, ist.

5. Verfahren nach einem der Ansprüche 1 bis 4, wobei
der QUIC-Funktionsparameter ferner eines oder mehrere der Folgenden umfasst: eine QUIC-Funktions-IP-Adresse, eine QUIC-Funktionsportnummer, eine zweite QUIC-Verbindungskennung, einen Anzeigeparameter einer weggelassenen QUIC-Verbindungskennung, Informationen über eine zweite QUIC-Version oder einen Übertragungsparameter, wobei der Anzeigeparameter der weggelassenen QUIC-Verbindungskennung anzeigt, dass die QUIC-Verbindung keine Verbindungskennung verwendet; oder
der MP-QUIC-Funktionsparameter ferner eines oder mehrere der Folgenden umfasst:
eine MP-QUIC-Funktions-IP-Adresse, eine MP-QUIC-Funktionsportnummer, eine zweite MP-QUIC-Verbindungskennung, einen Anzeigeparameter einer weggelassenen MP-QUIC-Verbindungskennung, Informationen über eine zweite MP-QUIC-Version oder einen Übertragungsparameter, wobei der Anzeigeparameter der weggelassenen MP-QUIC-Verbindungskennung anzeigt, dass die MP-QUIC-Verbindung keine Verbindungskennung verwendet.

6. Verfahren nach Anspruch 5, wobei der MP-QUIC-Funktionsparameter ferner eines oder mehrere der Folgenden umfasst: eine Unterverbindungskennung, einen Zugriffstechnologieanzeigeparameter oder Informationen über eine Tunnelkennung, wobei die Unterverbindungskennung eine Verbindungskennung einer MP-QUIC-Unterverbindung ist, die dem Zugriffstechnologieanzeigeparameter entspricht oder den Informationen über die Tunnelkennung entspricht.

7. Verfahren nach einem der Ansprüche 1 bis 6, wobei das Bestimmen (S402, S502, S602, S702), durch das SMF-Netzelement, ob ein Verkehrsfluss in der PDU-Sitzung durch Verwenden eines QUIC-Verfahrens oder eines MP-QUIC-Verfahrens übertragen werden soll, umfasst:
Empfangen (S4023, S5023, S6023, S7023), durch das SMF-Netzelement, von QUIC-Verfahrensanzeigeinformationen oder MP-QUIC-Verfahrensanzeigeinformationen von einem Richtliniensteuerungsfunktions(PCF)-Netzelement, wobei die QUIC-Verfahrensanzeigeinformationen verwendet werden, um anzuzeigen, dass der Verkehrsfluss in der PDU-Sitzung durch Verwenden des QUIC-Verfahrens übertragen werden soll, oder die MP-QUIC-Verfahrensanzeigeinformationen verwendet werden, um anzuzeigen, dass der Verkehrsfluss in der PDU-Sitzung durch Verwenden des MP-QUIC-Verfahrens übertragen werden soll.

8. Kommunikationsverfahren, das umfasst:
Senden (S401, S501, S601, S701), durch ein Endgerät, einer ersten Nachricht an ein Sitzungsverwaltungsfunktions(SMF)-Netzelement, wobei die erste Nachricht verwendet wird, um anzufordern, dass eine Protokolldateneinheit eine Protokolldateneinheits(PDU)-Sitzung herstellt oder aktualisiert, die erste Nachricht erste Anzeigeinformationen umfasst und die ersten Anzeigeinformationen Anzeigeinformationen, die anzeigen, dass das Endgerät eine schnelle Benutzerdatenprotokoll(UDP-)Internetverbindungs-(QUIC)-Fähigkeit unterstützt, oder Anzeigeinformationen, die anzeigen, dass das Endgerät eine mehrpfadige schnelle UDP-Internetverbindungs(MP-QUIC)-Fähigkeit unterstützt, sind; und
Empfangen (S405, S505, S605, S705), durch das Endgerät, einer zweiten Nachricht von dem SMF-Netzelement, wobei die zweite Nachricht verwendet wird, um anzuzeigen, dass die PDU-Sitzung erfolgreich hergestellt oder aktualisiert wird, die zweite Nachricht zweite Anzeigeinformationen umfasst und die zweiten Anzeigeinformationen verwendet werden, um anzuzeigen, dass ein Verkehrsfluss in der PDU-Sitzung durch Verwenden eines QUIC-Verfahrens übertragen werden soll, oder verwendet werden, um anzuzeigen, dass ein Verkehrsfluss in der PDU-Sitzung durch Verwenden eines MP-QUIC-Verfahrens übertragen werden soll;
wobei die zweiten Anzeigeinformationen einen QUIC-Funktionsparameter oder einen MP-QUIC-Funktionsparameter umfassen;
und **dadurch gekennzeichnet, dass**
der QUIC-Funktionsparameter oder der MP-QUIC-Funktionsparameter einen Sicherheitsparameter umfasst und der Sicherheitsparameter eine Nichtverschlüsselungsanzeige einschließt.

9. Verfahren nach Anspruch 8, wobei die Anzeigeinformationen, die verwendet werden, um anzuzeigen, dass das Endgerät die QUIC-Funktion unterstützt, eines oder mehrere der Folgenden umfassen: einen Anzeigeparameter einer weggelassenen QUIC-Verbindungskennung, eine erste QUIC-Verbindungskennung, einen QUIC-Fähigkeitsanzeigeparameter, einen QUIC-Anforderungsanzeigeparameter oder Informationen über eine erste QUIC-Version, wobei der Anzeigeparameter der weggelassenen QUIC-Verbindungskennung anzeigt, dass die QUIC-Verbindung keine Verbindungskennung verwendet, und die erste QUIC-Verbindungskennung eine Verbindungskennung, die durch das Endgerät einer QUIC-Verbindung zugewiesen wird, ist; oder
die Anzeigeinformationen, die verwendet werden, um anzuzeigen, dass das Endgerät die MP-QUIC-Fähigkeit unterstützt, eines oder mehrere der Folgenden umfassen:
einen Anzeigeparameter einer weggelassenen MP-QUIC-Verbindungskennung, eine erste MP-QUIC-Verbindungskennung, einen MP-QUIC-Fähigkeitsanzeigeparameter, einen MP-QUIC-Anforderungsanzeigeparameter oder Informationen über die erste MP-QUIC-Version, wobei der Anzeigeparameter der weggelassenen MP-QUIC-Verbindungskennung anzeigt, dass die MP-QUIC-Verbindung keine Verbindungskennung verwendet, und die erste MP-QUIC-Verbindungskennung eine Verbindungskennung, die einer MP-QUIC-Verbindung durch das Endgerät zugewiesen wird, ist.

10. Verfahren nach einem der Ansprüche 8 und 9, wobei
der QUIC-Funktionsparameter ferner eines oder mehrere der Folgenden umfasst: eine QUIC-Funktions-IP-Adresse, eine QUIC-Funktionsportnummer, eine zweite QUIC-Verbindungskennung, einen Anzeigeparameter einer weggelassenen QUIC-Verbindungskennung, Informationen über eine zweite QUIC-Version oder einen Übertragungsparameter, wobei der Anzeigeparameter der weggelassenen QUIC-Verbindungskennung anzeigt, dass die QUIC-Verbindung keine Verbindungskennung verwendet; oder
der MP-QUIC-Funktionsparameter ferner eines oder mehrere der Folgenden umfasst:
eine MP-QUIC-Funktions-IP-Adresse, eine MP-QUIC-Funktionsportnummer, eine zweite MP-QUIC-Verbindungskennung, einen Anzeigeparameter einer weggelassenen MP-QUIC-Verbindungskennung, Informationen über eine zweite MP-QUIC-Version oder einen Übertragungsparameter, wobei der Anzeigeparameter der weggelassenen MP-QUIC-Verbindungskennung anzeigt, dass die MP-QUIC-Verbindung keine Verbindungskennung verwendet.

11. Verfahren nach einem der Ansprüche 8 bis 10, das ferner umfasst:
Herstellen, durch das Endgerät, der QUIC-Verbindung oder der MP-QUIC-Verbindung zu einem Benutzerebenenfunktions(UPF)-Netzelement basierend auf der zweiten Nachricht; und
Durchführen (S406, S506, S606, S706), durch das Endgerät, einer Datenübertragung durch Verwenden der QUIC-Verbindung oder der MP-QUIC-Verbindung.

12. Kommunikationseinrichtung, die einen Prozessor und eine Kommunikationsschnittstelle umfasst, wobei
die Kommunikationsschnittstelle konfiguriert ist, um einen Vorgang zum Senden oder Empfangen einer Nachricht in einem SMF-Netzelement in dem Kommunikationsverfahren nach einem der Ansprüche 1 bis 7 durchzuführen oder einen Vorgang zum Senden oder Empfangen einer Nachricht in einem Endgerät in dem Kommunikationsverfahren nach einem der Ansprüche 8 bis 11 durchzuführen, und der Prozessor Anweisungen ausführt, um einen Verarbeitungs- oder Steuervorgang in dem SMF-Netzelement in dem Kommunikationsverfahren nach einem der Ansprüche 1 bis 7 durchzuführen oder einen Verarbeitungs- oder Steuervorgang in dem Endgerät in dem Kommunikationsverfahren nach einem der Ansprüche 8 bis 11 durchzuführen.

13. Computerlesbares Speichermedium, wobei das computerlesbare Speichermedium Anweisungen speichert; und wenn die Anweisungen ausgeführt werden, das Kommunikationsverfahren nach einem der Ansprüche 1 bis 7 oder das Kommunikationsverfahren nach einem der Ansprüche 8 bis 11 implementiert wird.

14. Kommunikationssystem, das ein Sitzungsverwaltungsfunktionsnetzelement und ein Zugriffs- und Mobilitätsverwaltungsfunktionsnetzelement umfasst, das konfiguriert ist, um mit der Sitzungsverwaltungsfunktion zu kommunizieren, wobei das Sitzungsverwaltungsfunktionsnetzelement konfiguriert ist, um das Kommunikationsverfahren nach einem der Ansprüche 1 bis 7 durchzuführen.

## Revendications

1. Procédé de communication, comprenant :
la réception (S401, S501, S601, S701), par un élément de réseau de fonction de gestion de session, SMF, d'un premier message en provenance d'un dispositif terminal, dans lequel le premier message est utilisé pour demander d'établir ou de mettre à jour une session d'unité de données de protocole, PDU, le premier message comprend des premières informations d'indication, et les premières informations d'indication sont des informations d'indication utilisées pour indiquer que le dispositif terminal prend en charge une capacité de connexion Internet de protocole de données d'utilisateur, UDP, rapide, QUIC, ou des infirmations d'indication utilisées pour indiquer que le dispositif terminal prend en charge une capacité de connexion Internet UDP rapide à trajets multiples, MP-QUIC ;
le fait de déterminer (S402, S502, S602, S702), par l'élément de réseau SMF, si un flux de trafic dans la session PDU doit être transmis en utilisant un procédé QUIC ou un procédé MP-QUIC ; et
l'envoi (S405, S505, S605, S705), par l'élément de réseau SMF, d'un second message au dispositif terminal, dans lequel le second message est utilisé pour indiquer que la session PDU est établie ou mise à jour avec succès, le second message comprend des secondes informations d'indication, et les secondes informations d'indication sont utilisées pour indiquer que le flux de trafic dans la session PDU doit être transmis en utilisant le procédé QUIC, ou sont utilisées pour indiquer que le flux de trafic dans la session PDU doit être transmis en utilisant le procédé MP-QUIC ;
dans lequel les secondes informations d'indication comprennent un paramètre de fonction QUIC ou un paramètre de fonction MP-QUIC, et le procédé comprend en outre :
l'obtention, par l'élément de réseau SMF, du paramètre de fonction QUIC ou du paramètre de fonction MP-QUIC ; **caractérisé en ce que**
le paramètre de fonction QUIC ou le paramètre de fonction MP-QUIC comprend un paramètre de sécurité, et le paramètre de sécurité comporte une indication de non-chiffrement.

2. Procédé selon la revendication 1, dans lequel l'obtention, par l'élément de réseau SMF, du paramètre de fonction QUIC ou du paramètre de fonction MP-QUIC comprend :
l'envoi (S403, S603), par l'élément de réseau SMF à un élément de réseau de fonction de plan utilisateur, UPF, des informations d'indication utilisées pour indiquer que le flux de trafic dans la session PDU doit être transmis en utilisant le procédé QUIC, ou des informations d'indication utilisées pour indiquer que le flux de trafic dans la session PDU doit être transmis en utilisant le procédé MP-QUIC ; et
la réception (S404, S604), par l'élément de réseau SMF, du paramètre de fonction QUIC ou du paramètre de fonction MP-QUIC en provenance de l'élément de réseau UPF.

3. Procédé selon la revendication 1, dans lequel l'obtention, par l'élément de réseau SMF, du paramètre de fonction QUIC ou du paramètre de fonction MP-QUIC comprend :
l'attribution, par l'élément de réseau SMF, du paramètre de fonction QUIC ou du paramètre de fonction MP-QUIC ; et
le procédé comprend en outre : l'envoi (S503, S703), par l'élément de réseau SMF, du paramètre de fonction QUIC ou du paramètre de fonction MP-QUIC à un élément de réseau UPF.

4. Procédé selon l'une quelconque des revendications 1 à 3, dans lequel les informations d'indication utilisées pour indiquer que le dispositif terminal prend en charge la capacité QUIC comprennent un ou plusieurs des éléments suivants : un paramètre d'indication d'un identificateur de connexion omis QUIC, un premier identificateur de connexion QUIC, un paramètre d'indication de capacité QUIC, un paramètre d'indication de demande QUIC, ou des premières informations de version QUIC, dans lequel le paramètre d'indication de l'identificateur de connexion omis QUIC indique que la connexion QUIC n'utilise pas d'identificateur de connexion, et le premier identificateur de connexion QUIC est un identificateur de connexion attribué par le dispositif terminal à une connexion QUIC ; ou
les informations d'indication utilisées pour indiquer que le dispositif terminal prend en charge la capacité MP-QUIC comprennent un ou plusieurs des éléments suivants : un paramètre d'indication d'un identificateur de connexion omis MP-QUIC, un premier identificateur de connexion MP-QUIC, un paramètre d'indication de capacité MP-QUIC, un paramètre d'indication de demande MP-QUIC, ou des premières informations de version MP-QUIC, dans lequel le paramètre d'indication de l'identificateur de connexion omis MP-QUIC indique que la connexion MP-QUIC n'utilise pas d'identificateur de connexion, et le premier identificateur de connexion MP-QUIC est un identificateur de connexion attribué par le dispositif terminal à une connexion MP-QUIC.

5. Procédé selon l'une quelconque des revendications 1 à 4, dans lequel
le paramètre de fonction QUIC comprend en outre un ou plusieurs des éléments suivants : une adresse IP de fonction QUIC, un numéro de port de fonction QUIC, un second identificateur de connexion QUIC, un paramètre d'indication d'un identificateur de connexion omis QUIC, des secondes informations de version QUIC, ou un paramètre de transmission, dans lequel le paramètre d'indication de l'identificateur de connexion omis QUIC indique que la connexion QUIC n'utilise pas d'identificateur de connexion ; ou
le paramètre de fonction MP-QUIC comprend en outre un ou plusieurs des éléments suivants : une adresse IP de fonction MP-QUIC, un numéro de port de fonction MP-QUIC, un second identificateur de connexion MP-QUIC, un paramètre d'indication d'un identificateur de connexion omis MP-QUIC, des secondes informations de version MP-QUIC, ou un paramètre de transmission, dans lequel le paramètre d'indication de l'identificateur de connexion omis MP-QUIC indique que la connexion MP-QUIC n'utilise pas d'identificateur de connexion.

6. Procédé selon la revendication 5, dans lequel le paramètre de fonction MP-QUIC comprend en outre un ou plusieurs des éléments suivants : un identificateur de sous-connexion, un paramètre d'indication de technologie d'accès, ou des informations concernant un identificateur de tunnel, dans lequel l'identificateur de sous-connexion est un identificateur de connexion d'une sous-connexion MP-QUIC correspondant au paramètre d'indication de technologie d'accès ou correspondant aux informations concernant l'identificateur de tunnel.

7. Procédé selon l'une quelconque des revendications 1 à 6, dans lequel le fait de déterminer (S402, S502, S602, S702), par l'élément de réseau SMF, si un flux de trafic dans la session PDU doit être transmis en utilisant un procédé QUIC ou un procédé MP-QUIC comprend :
la réception (S4023, S5023, S6023, S7023), par l'élément de réseau SMF, d'informations d'indication de procédé QUIC ou d'informations d'indication de procédé MP-QUIC en provenance d'un élément de réseau de fonction de commande de politique, PCF, dans lequel les informations d'indication de procédé QUIC sont utilisées pour indiquer que le flux de trafic dans la session PDU doit être transmis en utilisant le procédé QUIC, ou les informations d'indication de procédé MP-QUIC sont utilisées pour indiquer que le flux de trafic dans la session PDU doit être transmis en utilisant le procédé MP-QUIC.

8. Procédé de communication, comprenant :
l'envoi (S401, S501, S601, S701), par un dispositif terminal, d'un premier message à un élément de réseau de fonction de gestion de session, SMF, dans lequel le premier message est utilisé pour demander à une unité de données de protocole d'établir ou de mettre à jour une session d'unité de données de protocole, PDU, le premier message comprend des premières informations d'indication, et les premières informations d'indication sont des informations d'indication utilisées pour indiquer que le dispositif terminal prend en charge une capacité de connexion Internet de protocole de données d'utilisateur, UDP, rapide, QUIC, ou des informations d'indication utilisées pour indiquer que le dispositif terminal prend en charge une capacité de connexion Internet UDP rapide à trajets multiples, MP-QUIC ; et
la réception (S405, S505, S605, S705), par le dispositif terminal, d'un second message en provenance de l'élément de réseau SMF, dans lequel le second message est utilisé pour indiquer que la session PDU est établie ou mise à jour avec succès, le second message comprend des secondes informations d'indication, et les secondes informations d'indication sont utilisées pour indiquer qu'un flux de trafic dans la session PDU doit être transmis en utilisant un procédé QUIC, ou sont utilisées pour indiquer qu'un flux de trafic dans la session PDU doit être transmis en utilisant un procédé MP-QUIC ;
dans lequel les secondes informations d'indication comprennent un paramètre de fonction QUIC ou un paramètre de fonction MP-QUIC ; et
**caractérisé en ce que**
le paramètre de fonction QUIC ou le paramètre de fonction MP-QUIC comprend un paramètre de sécurité, et le paramètre de sécurité comporte une indication de non-chiffrement.

9. Procédé selon la revendication 8, dans lequel les informations d'indication utilisées pour indiquer que le dispositif terminal prend en charge la capacité QUIC comprennent un ou plusieurs des éléments suivants : un paramètre d'indication d'un identificateur de connexion omis QUIC, un premier identificateur de connexion QUIC, un paramètre d'indication de capacité QUIC, un paramètre d'indication de demande QUIC, ou des premières informations de version QUIC, dans lequel le paramètre d'indication de l'identificateur de connexion omis QUIC indique que la connexion QUIC n'utilise pas d'identificateur de connexion, et le premier identificateur de connexion QUIC est un identificateur de connexion attribué par le dispositif terminal à une connexion QUIC ; ou
les informations d'indication utilisées pour indiquer que le dispositif terminal prend en charge la capacité MP-QUIC comprennent un ou plusieurs des éléments suivants : un paramètre d'indication d'un identificateur de connexion omis MP-QUIC, un premier identificateur de connexion MP-QUIC, un paramètre d'indication de capacité MP-QUIC, un paramètre d'indication de demande MP-QUIC, ou des premières informations de version MP-QUIC, dans lequel le paramètre d'indication de l'identificateur de connexion omis MP-QUIC indique que la connexion MP-QUIC n'utilise pas d'identificateur de connexion, et le premier identificateur de connexion MP-QUIC est un identificateur de connexion attribué par le dispositif terminal à une connexion MP-QUIC.

10. Procédé selon l'une quelconque des revendications 8 à 9, dans lequel
le paramètre de fonction QUIC comprend en outre un ou plusieurs des éléments suivants : une adresse IP de fonction QUIC, un numéro de port de fonction QUIC, un second identificateur de connexion QUIC, un paramètre d'indication d'un identificateur de connexion omis QUIC, des secondes informations de version QUIC, ou un paramètre de transmission, dans lequel le paramètre d'indication de l'identificateur de connexion omis QUIC indique que la connexion QUIC n'utilise pas d'identificateur de connexion ; ou
le paramètre de la fonction MP-QUIC comprend en outre un ou plusieurs des éléments suivants : une adresse IP de fonction MP-QUIC, un numéro de port de fonction MP-QUIC, un second identificateur de connexion MP-QUIC, un paramètre d'indication d'un identificateur de connexion omis MP-QUIC, des secondes informations de version MP-QUIC, ou un paramètre de transmission, dans lequel le paramètre d'indication de l'identificateur de connexion omis MP-QUIC indique que la connexion MP-QUIC n'utilise pas d'identificateur de connexion.

11. Procédé selon l'une quelconque des revendications 8 à 10, comprenant en outre :
l'établissement, par le dispositif terminal, de la connexion QUIC ou de la connexion MP-QUIC à un élément de réseau de fonction de plan utilisateur UPF sur la base du second message ; et
la réalisation (S406, S506, S606, S706), par le dispositif terminal, d'une transmission de données en utilisant la connexion QUIC ou la connexion MP-QUIC.

12. Appareil de communication, comprenant un processeur et une interface de communication, dans lequel
l'interface de communication est configurée pour réaliser une opération d'envoi ou de réception d'un message dans un élément de réseau SMF dans le procédé de communication selon l'une quelconque des revendications 1 à 7, ou pour réaliser une opération d'envoi ou de réception d'un message dans un dispositif terminal dans le procédé de communication selon l'une quelconque des revendications 8 à 11, et le processeur exécute des instructions pour réaliser une opération de traitement ou de commande dans l'élément de réseau SMF dans le procédé de communication selon l'une quelconque des revendications 1 à 7, ou pour réaliser une opération de traitement ou de commande dans le dispositif terminal dans le procédé de communication selon l'une quelconque des revendications 8 à 11.

13. Support de stockage lisible par ordinateur, dans lequel le support de stockage lisible par ordinateur stocke des instructions ; et lorsque les instructions sont exécutées, le procédé de communication selon l'une quelconque des revendications 1 à 7 ou le procédé de communication selon l'une quelconque des revendications 8 à 11 est mis en œuvre.

14. Système de communication, comprenant un élément de réseau de fonction de gestion de session et un élément de réseau de fonction de gestion de l'accès et de la mobilité configuré pour communiquer avec la fonction de gestion de session, dans lequel l'élément de réseau de fonction de gestion de session est configuré pour réaliser le procédé de communication selon l'une quelconque des revendications 1 à 7.
